(19) **Europäisches Patentamt / European Patent Office / Office européen des brevets**

(11) **EP 2 108 448 B1**

(12) **EUROPEAN PATENT SPECIFICATION**

(45) Date of publication and mention
of the grant of the patent:
**14.06.2017 Bulletin 2017/24**

(51) Int Cl.:
*B01J 37/02* *(2006.01)*  *B01J 35/00* *(2006.01)*
*B01J 23/63* *(2006.01)*  *C04B 28/24* *(2006.01)*
*C04B 35/565* *(2006.01)*  *C04B 37/00* *(2006.01)*
*C04B 38/00* *(2006.01)*  *F01N 3/022* *(2006.01)*
*F01N 3/035* *(2006.01)*  *C04B 111/00* *(2006.01)*
*B01J 35/04* *(2006.01)*  *B01D 46/24* *(2006.01)*

(21) Application number: **09250827.4**

(22) Date of filing: **24.03.2009**

(54) **HONEYCOMB CATALYST BODY**

WABENKATALYSATORKÖRPER

CORPS DE CATALYSEUR EN NID D'ABEILLE

(84) Designated Contracting States:
**DE FR**

(30) Priority: **27.03.2008 JP 2008083285**

(43) Date of publication of application:
**14.10.2009 Bulletin 2009/42**

(73) Proprietor: **NGK Insulators, Ltd.**
**Aichi Pref., 467-8530 (JP)**

(72) Inventors:
• **Furuta, Yasuyuki**
**Nagoya City, Aichi-ken 467-8530 (JP)**

• **Hiramatsu, Takuya**
**Nagoya City, Aichi-ken 467-8530 (JP)**

(74) Representative: **Naylor, Matthew John et al**
**Mewburn Ellis LLP**
**City Tower**
**40 Basinghall Street**
**London EC2V 5DE (GB)**

(56) References cited:
**EP-A2- 1 820 946      WO-A1-2004/070177**
**WO-A1-2007/091688   WO-A2-2008/079668**
**GB-A- 2 071 639        JP-A- 2006 272 157**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

BACKGROUND OF THE INVENTION

Field of the Invention

The present invention relates to a honeycomb catalyst body. More particularly, the present invention relates to a honeycomb catalyst body that can effectively collect and remove particulate matter, selectively supports a catalyst to reduce the amount of catalyst, can be reduced in production cost, can reduce the rate of increase in pressure loss, and can be easily produced.

Description of Related Art

A filter and a catalyst have been used to process exhaust gas to prevent pollution and improve the environment. A honeycomb structure (honeycomb catalyst body) in which a catalyst is supported on a partition wall using a catalyst slurry has been widely used as an exhaust gas filter (catalyst carrier). The honeycomb catalyst body is incorporated in a diesel engine exhaust system and the like as a diesel particulate filter (DPF) in order to collect and remove particulate matter (PM) (detected as an organic solvent soluble substance, soot, and a sulfate) contained in exhaust gas discharged from a diesel engine and the like.

In recent years, a wall-flow type filter has been widely used as a DPF. The wall-flow type filter is configured so that the cells of the honeycomb structure are alternately plugged on either end (i.e., each end of the honeycomb structure has a checkered-flag pattern). Therefore, exhaust gas that has entered the filter through one end face passes through the porous partition wall (filtration layer), and is discharged through the other end face.

In order to continuously use such a honeycomb structure (filter) for a long period of time, the filter need to be regenerated cyclically. That is, it is necessary to burn and remove PM deposited in the filter in order to reduce the pressure loss that has increased due to PM deposited in the filter with time to recover the initial filter performance. Since PM deposited in the filter is burned sequentially from the fluid (exhaust gas) inlet during filter regeneration, an increase in temperature occurs to a large extent in an area near the fluid outlet due to heat generated in the upstream area and heat due to PM burning. Therefore, an increase in temperature in each section of the filter tends to become non-uniform so that defects (e.g., cracks) occur due to thermal stress.

A wall-flow type filter that is formed so that the average pore size of the partition wall is reduced stepwise or successively from the fluid inlet to the fluid outlet in order to suppress the non-uniformity of combustion heat during filter regeneration (see JP-A-1-145378, for example), and a DPF that has an area that does not allow exhaust gas to pass through in the downstream area (see JP-A-2006-231116, for example), have been disclosed.

JP 2006 272157 describes a modified honeycomb having partition walls which are of greater porosity in an upstream area than in a downstream area. By immersing the downstream area in the slurry, fine pores of the walls are filled. An oxidation catalyst may be disposed between fuel adding means and a ceramic honeycomb filter. With the oxidation catalyst, exhaust gas is oxidised and the temperature of the exhaust gas is raised by the oxidation reaction. Thus heated exhaust gas is introduced into the upstream part of the ceramic honeycomb filter. This ensures the increase of temperature of the upstream side of the partition wall from an exhaust gas inlet side plugging portion and an exhaust gas inlet side plugging portion.

WO 2007/091688 describes a honeycomb structure made up of a number of segments. Each segment has cells therethrough, defined by inner walls and plugged alternately. The segments are bonded by a binder. Around each segment is an outer wall. The inner walls have "first pores" therein, and the outer wall has "second pores" therein. The document describes filling the second pores with particles, to reduce the porosity of the outer walls. The outer walls are said to have lower porosity than the inner walls. Permeation of catalyst through the outer wall is hindered, so that the outer surface of the outer wall has a reduced amount of catalyst present. This prevents catalyst material interfering in bonding between honeycomb segments.

SUMMARY OF THE INVENTION

However, it is difficult to achieve a satisfactory effect using such a wall-flow type filter.

A method that suppresses non-uniformity of combustion heat during regeneration by causing a number of particles to adhere to at least part of the inner surface of the pores formed in the partition wall in the DPF downstream area to increase the heat capacity in an area in which the temperature increases to a large extent during regeneration and partially reduce the amount of PM deposited has been proposed.

However, the rate of increase in pressure loss increases after the catalyst has been supported on the filter. Moreover, since the amount of PM deposited is partially reduced in an area in which the temperature increases to a large extent during regeneration, the catalyst is unnecessarily supported on the filter. Therefore, the production cost increases.

The present invention was conceived in view of the above-described problems. An object of the present invention is to provide a honeycomb catalyst body. More particularly, the present invention relates to a honeycomb catalyst body that can effectively collect and remove particulate matter, selectively supports a catalyst to reduce the amount of catalyst, can be reduced in production cost, can reduce the rate of increase in pressure loss, and can be easily produced.

According to the present invention, a honeycomb catalyst body is provided, as set out in claim 1. Described herein are:

[1] A honeycomb catalyst body comprising: a modified honeycomb structure that includes a porous partition wall having a number of pores, the partition wall being disposed to form a plurality of cells through the modified honeycomb structure between two end faces; and a catalyst that is supported in a given area of the partition wall, the modified honeycomb structure including: a first area that includes a modified partition wall and includes at least part of one end face of the modified honeycomb structure, a number of particles adhering to an inner surface of pores formed in the modified partition wall; and a second area that includes an unmodified partition wall and includes at least part of the other end face of the modified honeycomb structure, the particles not adhering to the unmodified partition wall; the modified partition wall having a porosity lower than that of the unmodified partition wall; and an amount of the catalyst supported in the first area per unit volume being smaller than that of the second area.

[2] The honeycomb catalyst body according to [1], wherein the modified honeycomb structure further includes a third area that includes part of the one end face and includes an unmodified partition wall to which the particles do not adhere.

[3] The honeycomb catalyst body according to [1], wherein the first area extends from a center to a periphery of the honeycomb catalyst body in a range corresponding to 2/5 to 1/1 of a radius of the honeycomb catalyst body and extends from the one end face of the honeycomb catalyst body along a cell extension direction in a range corresponding to 1/10 to 1/2 of a total length of the honeycomb catalyst body.

[4] The honeycomb catalyst body according to any one of [1] to [3], the honeycomb catalyst body being formed by integrally bonding a plurality of segments.

[5] The honeycomb catalyst body according to [4], the honeycomb catalyst body comprising a peripheral segment positioned in a periphery of the honeycomb catalyst body and a center segment positioned inside the peripheral segment, wherein the first area extends from one end face of the center segment along the cell extension direction in a range corresponding to 1/10 to 1/2 of a total length of the center segment.

[6] The honeycomb catalyst body according to any one of [1] to [5], wherein the partition wall of the modified honeycomb structure has a porosity of 30 to 80%.

[7] The honeycomb catalyst body according to any one of [1] to [6], wherein the partition wall of the modified honeycomb structure has an average pore size of 5 to 40 $\mu$m.

[8] The honeycomb catalyst body according to any one of [1] to [7], wherein an amount of the catalyst supported in the second area per unit volume is 5 to 50 g/1.

[9] The honeycomb catalyst body according to any one of [1] to [8], wherein an amount of the catalyst supported in the first area per unit volume is 0 to 40 g/1.

[10] The honeycomb catalyst body according to any one of [1] to [9], the honeycomb catalyst body satisfying the following formula (1),

$$2 \leq X-Y \leq 20 \qquad (1)$$

where, X is a porosity (%) of the unmodified partition wall, and Y is a porosity (%) of the modified partition wall.

[11] The honeycomb catalyst body according to any one of [1] to [9], the honeycomb catalyst body satisfying the following formula (2),

$$0.1 \leq A-B \leq 10 \qquad (2)$$

where, A is an average pore size ($\mu$m) of the unmodified partition wall, and B is an average pore size ($\mu$m) of the modified partition wall.

[12] The honeycomb catalyst body according to any one of [1] to [11], further comprising: plugging sections that plug one open end of given cells and the other open end of the remaining cells.

[13] The honeycomb catalyst body according to [12], wherein the one end face having a cell open ratio higher than that of the other end face.

The honeycomb catalyst body of the present invention includes the modified honeycomb structure that includes the porous partition wall having a number of pores, the partition wall being disposed to form a plurality of cells through the modified honeycomb structure between two end faces; and a catalyst that is supported in a given area of the partition wall, the modified honeycomb structure including the first area that includes the modified partition wall and includes at least part of one end face of the two end faces, a number of particles adhering to an inner surface of pores formed in the modified partition wall, and the second area that includes the unmodified partition wall and includes at least part of the other end face of the two end faces, the particles not adhering to the unmodified partition wall, the modified partition wall having a porosity lower than that of the unmodified partition wall, and the amount of the catalyst supported in the first area per unit volume being smaller than that of the second area. Therefore, particulate matter can be effectively collected and removed. Since the catalyst is selectively supported, the amount of catalyst can be reduced (i.e., the production cost can be reduced). Moreover, the honeycomb catalyst body of the present invention can reduce the rate of increase in pressure loss, and can be easily produced.

BRIEF DESCRIPTION OF THE DRAWINGS

FIG. 1 is a perspective view showing one embodiment of a honeycomb catalyst body of the present invention.
FIG. 2 is a cross-sectional view showing the honeycomb catalyst body shown in FIG. 1 along the center-axis direction.
FIG. 3 is a perspective view showing another embodiment of the honeycomb catalyst body of the present invention.
FIG. 4 is a cross-sectional view schematically showing the honeycomb catalyst body shown in FIG. 3.
FIG. 5 is a cross-sectional view schematically showing a modification of the honeycomb catalyst body shown in FIG. 3.
FIG. 6 is a cross-sectional view schematically showing a modification of the honeycomb catalyst body shown in FIG. 3.
FIG. 7 is a cross-sectional view schematically showing a modification of the honeycomb catalyst body shown in FIG. 3.
FIG. 8 is a cross-sectional view schematically showing a modification of the honeycomb catalyst body shown in FIG. 3.

DESCRIPTION OF PREFERRED EMBODIMENTS

The preferred embodiments for carrying out the present invention are described below.

[1] Honeycomb catalyst body

A honeycomb catalyst body according to one embodiment of the present invention includes a modified honeycomb structure that includes a porous partition wall having a number of pores, the partition wall being disposed to form a plurality of cells through the modified honeycomb structure between two end faces, and a catalyst that is supported in a given area of the partition wall, the modified honeycomb structure including a first area that includes a modified partition wall and includes at least part of one end face of the two end faces, a number of particles adhering to an inner surface of pores formed in the modified partition wall, and a second area that includes an unmodified partition wall and includes at least part of the other end face of the two end faces, the particles not adhering to the unmodified partition wall, the modified partition wall having a porosity lower than that of the unmodified partition wall, and an amount of the catalyst supported in the first area per unit volume being smaller than that of the second area.

The honeycomb catalyst body like this can effectively collect and remove particulate matter. Since the catalyst is supported selectively, the amount of catalyst can be reduced (i.e., the production cost can be reduced). Moreover, the rate of increase in pressure loss can be reduced. In addition, the honeycomb catalyst body can be easily produced. It is preferable to dispose the honeycomb catalyst body of the present embodiment so that exhaust gas containing particulate matter enters the honeycomb catalyst body through one end face and is discharged through the other end face.

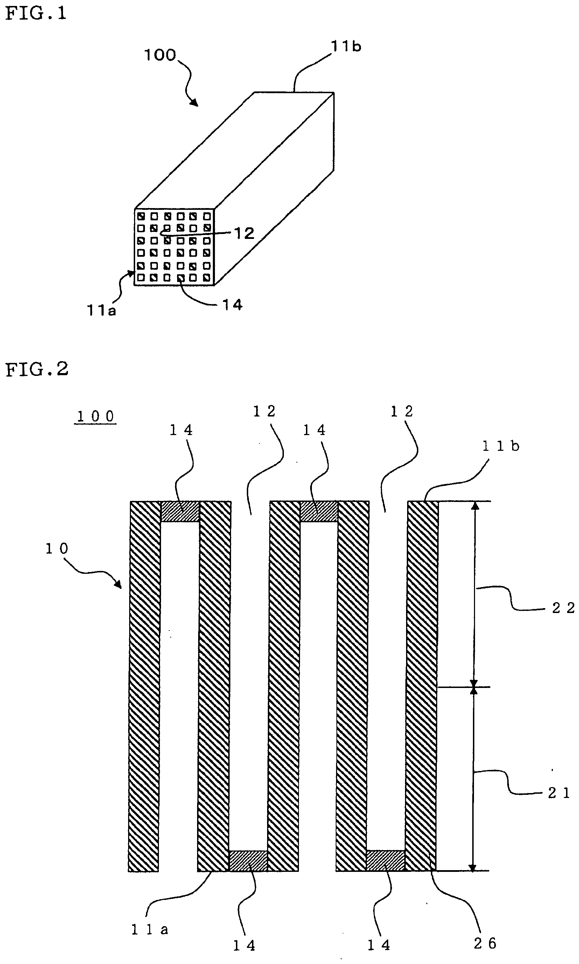

FIG. 1 is a perspective view showing one embodiment of the honeycomb catalyst body of the present invention. As shown in FIG. 1, a honeycomb catalyst body 100 of the present embodiment includes a modified honeycomb structure that includes a porous partition wall having a number of pores, and a catalyst that is supported in a given area of the partition wall, the partition wall being disposed to form a plurality of cells 12 through the modified honeycomb structure between two end faces 11a and 11b. The shape of the honeycomb catalyst body of the present embodiment is not limited to a quadrangular prism shown in FIG. 1, but may be a column, an elliptical column, a triangular prism, a polygonal prism, and the like.

[1-1] Modified honeycomb structure

The modified honeycomb structure included in the honeycomb catalyst body of the present embodiment includes the porous partition wall having a number of pores, the partition wall being disposed to form a plurality of cells through the modified honeycomb structure between the end faces. The modified honeycomb structure includes plugging sections that plug one open end of given cells and the other open end of the remaining cells. The plugging sections are provided so that each end face of the modified honeycomb structure has a checkered-flag pattern. As shown in FIGS. 1 and 2, plugging sections 14 are disposed to plug one open end of given cells among the plurality of cells 12 and the other open end of the remaining cells so that each end face of the modified honeycomb structure has a checkered-flag pattern (i.e., adjacent cells are plugged on opposite ends), for example. The honeycomb catalyst body that includes the above-mentioned plugging sections increases the contact frequency of exhaust gas and the catalyst so that the exhaust gas can be efficiently purified, as compared with a honeycomb catalyst body that does not include the plugging sections. The material for the plugging sections is not particularly limited. The material for the partition wall (described later) may be suitably used as the material for the plugging sections.

In the modified honeycomb structure that includes the plugging sections (i.e., the honeycomb catalyst body that includes the plugging sections), it is preferable that one end face have a cell open ratio higher than that of the other end face. This reduces a pressure loss when PM is deposited.

[1-1-1] Partition wall

The material for the partition wall of the modified honeycomb structure is not particularly limited, but is preferably a ceramic from the viewpoint of strength, heat resistance, and the like. The ceramic preferably contains at least one material selected from the group consisting of alumina, mullite, cordierite, silicon carbide (SiC), silicon nitride, a silicon-silicon carbide composite material formed using silicon carbide as a filler and silicon as a binder, spinel, aluminum titanate, lithium aluminum silicate (LAS), and an Fe-Cr-Al metal as the main component. The term "main component" used herein refers to a component that accounts for 50 mass% or more of the material. In particular, silicon carbide, the silicon-silicon carbide composite material, cordierite, or aluminum titanate is preferable from the viewpoint of strength, heat resistance, and the like.

The thickness of the partition wall is not particularly limited, but is preferably 7 to 20 mil (178 to 508 $\mu$m), more preferably 8 to 16 mil (203 to 406 $\mu$m), and particularly preferably 10 to 12 mil (254 to 305 $\mu$m). If the thickness of the partition wall is below 7 mil, the honeycomb structure may have an insufficient strength. If the thickness of the partition wall is exceeding 20 mil, a pressure loss may increase. The term "thickness of the partition wall" used herein refers to a value measured by analyzing an image of the cross section of the partition wall taken using a scanning electron microscope (SEM) or a microscope.

The shape (i.e., the shape of the cross section perpendicular to the center-axis direction of the honeycomb catalyst body) of each cell formed by disposing the partition wall is not particularly limited, but may be a polygon (e.g., triangle, quadrangle, hexagon, or octagon), a circle, an oval, a race track shape, a shape obtained by modifying the above-mentioned shape, and the like. The shape of each cell is preferably a triangle, a quadrangle, or a hexagon since a cell having such a shape can be easily formed. The cross-sectional shape of each cell may be either the same or different. For example, quadrangular cells and octagonal cells may be provided in combination. In this case, the fluid-inlet-side surface area can be increased by forming octagonal cells as fluid-inlet-side cells so that a pressure loss when PM is deposited can be reduced.

The cell density is not particularly limited, but is preferably 140 to 350 cells/in$^2$ (cpsi), more preferably 160 to 320 cpsi, and still more preferably 200 to 300 cpsi. If the cell density is below 140 cpsi, the geometric surface area of the filter may be insufficient. If the cell density is exceeding 350 cpsi, a pressure loss may increase. The term "cell density" used herein refers to the number of cells per unit area in the cross section of the honeycomb catalyst body perpendicular to the center-axis direction. The unit "cpsi" is an abbreviation for "cells per square inch" (i.e., the number of cells per square inch). For example, 10 cpsi corresponds to about 1.55 cells/cm$^2$.

The modified honeycomb structure included in the honeycomb catalyst body of the present embodiment includes a first area that includes a modified partition wall in which a number of particles adhere to the inner surface of the pores and includes at least part of one end face, and a second area that includes an unmodified partition wall in which the particles do not adhere to the inner surface of the pores and includes at least part of the other end face. A modified honeycomb structure 10 (honeycomb catalyst body 100) shown in FIG. 2 includes a first area 21 and a second area 22 other than the first area 21, the first area 21 extending from the center to the periphery of the honeycomb catalyst body 100 in a range corresponding to the radius of the honeycomb catalyst body (i.e., the first area 21 includes the entirety of one end face 11a) and extending from one end face 11 a of the honeycomb catalyst body 100 along the extension direction of the cells 12 in a range corresponding to half of the total length of the honeycomb catalyst body 100. FIG. 2 is a cross-sectional view showing the honeycomb catalyst body 100 shown in FIG. 1 along the center-axis direction.

The first area extends from the center to the periphery of the honeycomb catalyst body in a range corresponding to 2/5 to 1/1 of the radius of the honeycomb catalyst body and extend from one end face of the honeycomb catalyst body along the cell extension direction in a range corresponding to 1/10 to 1/2 of the total length of the honeycomb catalyst body. If the first area extends from the center to the periphery of the honeycomb catalyst body in a range corresponding to below 2/5 of the radius of the honeycomb catalyst body, since the ratio of the modified partition wall to the unmodified partition wall is small, it may be difficult to prevent defects (e.g., cracks) due to thermal stress. Moreover, since the amount of catalyst may not be sufficiently reduced, the production cost may not be sufficiently reduced.

If the first area extends from one end face of the honeycomb catalyst body in a range corresponding to below 1/10 of the total length of the honeycomb catalyst body, the temperature may not be sufficiently reduced during regeneration. Moreover, since the amount of catalyst may not be sufficiently reduced, the production cost may not be sufficiently reduced. If the first area extends from one end face of the honeycomb catalyst body in a range corresponding to exceeding 1/2 of the total length of the honeycomb catalyst body, a pressure loss may increase to an impractical level.

[1-1-2] Particle

A large number of particles adhere to at least part of the inner surface of the pores formed in the partition wall (modified partition wall) in the first area. Since the particles adhere to the inner surface of the pores, the volume of the space (pores) formed in the partition wall is reduced as compared with the volume of the space (pores) formed in the partition wall in which the particles do not adhere to the inner surface of the pores. Specifically, since the pore size is reduced by causing the particles to adhere to the inner surface of the pores, gas such as exhaust gas and moisture can pass through the pores, but particles (e.g., catalyst) having a size equal to or larger than a given size cannot pass through the pores, for example. Therefore, an area in which the catalyst is supported and the amount of catalyst supported can be set by adjusting the particle diameter of particles and the amount of particles adhering to the pores.

When using a honeycomb catalyst body as a filter that collects particulate matter contained in exhaust gas, the temperature of the exhaust gas outlet side tends to increase as compared with the temperature of the exhaust gas inlet side during use or regeneration. As a result, the outlet-side partition wall may be melted, or may break due to thermal impact. However, since the heat capacity of the partition wall increases and exhaust gas passes through the modified partition wall to only a small extent as compared with the unmodified partition wall by causing the particles to adhere to the inner surface of the pores, the amount of soot deposited (i.e., the amount of PM deposited) partially decreases. Therefore, the above-mentioned problem rarely occurs.

It is preferable that the material for the particles include at least one ceramic selected from the group consisting of silicon carbide (SiC particles), silicon nitride, cordierite, mullite, alumina, zirconia, zirconium phosphate, spinel, a silicon carbide-cordierite composite material, a silicon-silicon carbide composite material, lithium aluminum silicate, aluminum titanate, and titania, or an inorganic powder such as a Fe-Cr-Al-based metal, a Ni-based metal, a Si metal, or SiC. Note that particles (e.g., $\gamma$-alumina, ceria, zirconia, ceria complex oxide, or zirconia complex oxide) contained in a washcoating material used when causing the honeycomb structure to support a catalyst may also be used. The above materials may be used either individually or in combination. It is preferable to use the same material as the material for the honeycomb structure, or use the particles contained in the washcoating material.

A binder that secures the particles on the partition wall may be provided on the modified partition wall in addition to the particles. Examples of the binder include a colloidal sol such as a silica sol and an alumina sol, a clay compound that swells and exhibits binding capability, and the like. Specific examples of the colloidal sol include colloidal silica. Specific examples of the clay compound include montmorillonite.

It is preferable that the modified honeycomb structure included in the honeycomb catalyst body of the present embodiment further include a third area that includes part of one end face and includes the unmodified partition wall to which the particles do not adhere. The amount of catalyst can be reduced by providing the third area. Moreover, an increase in pressure loss can be prevented.

In the modified honeycomb structure, the porosity of the modified partition wall is lower than that of the unmodified partition wall. Therefore, exhaust gas that has entered the honeycomb catalyst body easily passes through the unmodified partition wall having a high porosity as compared with the modified partition wall. Therefore, exhaust gas can be effectively purified by causing a large amount of catalyst to be supported on the unmodified partition wall that allows a large amount of exhaust gas to pass through.

The porosity of the partition wall (i.e., the partition wall to which the particles do not adhere and which does not support the catalyst) of the modified honeycomb structure is preferably 30 to 80%, more preferably 40 to 70%, and particularly preferably 45 to 65%. If the porosity of the partition wall is below 30%, the rate of increase in pressure loss may increase to a large extent. If the porosity of the partition wall is exceeding 80%, the maximum temperature during filter regeneration may increase to an impractical level. The term "porosity" used herein refers to a value determined by cutting a tabular specimen having a thickness equal to that of the partition wall from the modified honeycomb structure, and measuring the porosity of the specimen by the Archimedes method.

The average pore size of the partition wall (i.e., the partition wall to which the particles do not adhere and which does not support the catalyst) of the modified honeycomb structure is preferably 5 to 40 μm, more preferably 5 to 30 μm, and particularly preferably 5 to 20 μm. If the average pore size of the partition wall is below 5 μm, the rate of increase in pressure loss may increase to a large extent. If the average pore size of the partition wall is exceeding 40 μm, it may be difficult to effectively collect and remove particulate matter contained in exhaust gas discharged from a diesel engine and the like. The term "average pore size" used herein refers to a value determined by cutting a specimen having a given shape (5×15 mm) from the modified honeycomb structure, and measuring the average pore size of the specimen using a mercury porosimeter.

[1-2] Catalyst

The catalyst included in the honeycomb catalyst body of the present embodiment is supported in a given area of the partition wall of the modified honeycomb structure. The amount of catalyst supported in the first area per unit volume need to be smaller than the amount of catalyst supported in the second area per unit volume. This suppresses a rapid increase in pressure loss. Moreover, since the amount of catalyst supported on the partition wall can be reduced, the production cost can be reduced.

The amount of catalyst supported in the second area per unit volume is preferably 5 to 50 g/l, and more preferably 5 to 30 g/l. If the amount of catalyst supported in the second area is below 5 g/l, it may be difficult to sufficiently purify particulate matter that adheres to the partition wall and a hydrocarbon (HC), CO, and the like contained in exhaust gas. If the amount of catalyst supported in the second area is exceeding 50 g/l, the rate of increase in pressure loss may increase to a large extent since the amount of catalyst is too large.

The amount of catalyst supported in the first area per unit volume is preferably 0 to 40 g/l, and more preferably 0 to 20 g/l. If the amount of catalyst supported in the first area is exceeding 40 g/l, the rate of increase in pressure loss may increase to a large extent since the amount of catalyst is too large. Moreover, the production cost may increase since the catalyst is supported in an amount larger than the necessary amount.

As an oxidizing catalyst, a noble metal such as platinum (Pt), palladium (Pd), or rhodium (Rh) is suitably used. Another catalyst or a purification material may be supported in addition to the noble metal. For example, a NOx storage catalyst (e.g., alkali metal (e.g., Li, Na, K, or Cs) or alkaline earth metal (e.g., Ca, Ba, or Sr)), a three-way catalyst, a co-catalyst such as cerium (Ce) oxide and/or zirconium (Zr) oxide, a hydrocarbon (HC) adsorbent, or the like may be supported.

For example, the oxidizing catalyst may include Ce and at least one rare-earth metal oxide, alkaline earth metal, or rare-earth complex oxide to which a transition metal is added. The rare-earth metal may be appropriately selected from Sm, Gd, Nd, Y, Zr, Ca, La, Pr, and the like.

When the catalyst includes the noble metal, the amount of noble metal supported in the second area per unit volume is preferably 0.5 to 20 g/l, and more preferably 0.5 to 12 g/l. If the amount of noble metal supported in the second area is below 0.5 g/l, it may be difficult to sufficiently purify particulate matter that adheres to the partition wall and a hydrocarbon (HC), CO, and the like contained in exhaust gas. If the amount of noble metal supported in the second area is exceeding 20 g/l, the production cost may increase since the amount of noble metal is too large.

When the catalyst includes the noble metal, the amount of noble metal supported in the first area per unit volume is preferably 0 to 15 g/l, and more preferably 0 to 7.5 g/l. If the amount of noble metal supported in the first area is exceeding 15 g/l, the production cost may increase since the amount of noble metal is too large.

It is preferable that the honeycomb catalyst body of the present embodiment satisfy the following formula (1). If the honeycomb catalyst body satisfies the formula (1), an increase in temperature near the outlet-side end face during regeneration can be appropriately suppressed while preventing an excessive increase in pressure loss. If the honeycomb catalyst body has a value "X-Y" below the lower limit "2" of the formula (1), an excessive increase in temperature near the outlet-side end face during regeneration may not be sufficiently suppressed. If the honeycomb catalyst body has a value "X-Y" exceeding the upper limit "20" of the formula (1), a pressure loss may increase.

$$2 \leq X\text{-}Y \leq 20 \qquad (1)$$

Where, X is the porosity (%) of the unmodified partition wall, and Y is the porosity (%) of the modified partition wall.

It is more preferable that the honeycomb catalyst body of the present embodiment satisfy the following formula (1-1).

$$3 \leq X\text{-}Y \leq 12 \qquad (1\text{-}1)$$

Where, X is the porosity (%) of the unmodified partition wall, and Y is the porosity (%) of the modified partition wall.

It is preferable that the honeycomb catalyst body of the present embodiment satisfy the following formula (2). If the honeycomb catalyst body satisfies the formula (2), an increase in temperature near the outlet-side area during regeneration can be appropriately suppressed while preventing an excessive increase in pressure loss. If the honeycomb catalyst body has a value "A-B" below the lower limit "0.1" of the formula (2), an excessive increase in temperature near the outlet-side end face during regeneration may not be sufficiently suppressed. If the honeycomb catalyst body has a value "A-B" exceeding the upper limit "10" of the formula (2), a pressure loss may increase.

$$0.1 \leq A-B \leq 10 \qquad (2)$$

Where, A is the average pore size ($\mu$m) of the unmodified partition wall, and B is the average pore size ($\mu$m) of the modified partition wall.

It is more preferable that the honeycomb catalyst body of the present embodiment satisfy the following formula (2-1).

$$0.1 \leq A-B \leq 5 \qquad (2-1)$$

Where, A is the average pore size ($\mu$m) of the unmodified partition wall, and B is the average pore size ($\mu$m) of the modified partition wall.

When the honeycomb catalyst body of the present embodiment is incorporated in an exhaust system of a diesel engine as a diesel particulate filter (DPF), for example, the honeycomb catalyst body is preferably disposed so that exhaust gas containing particulate matter enters the honeycomb catalyst body through the other end face (second area) and is discharged through one end face (first area).

[2] Method for producing honeycomb catalyst body

The honeycomb catalyst body according to this embodiment may be produced as follows.

A clay is prepared. The clay may be prepared by adding a binder (e.g., methyl cellulose, hydroxypropoxyl cellulose, hydroxyethyl cellulose, carboxymethyl cellulose, or polyvinyl alcohol) to a material such as silicon carbide, a silicon-silicon carbide composite material, silicon nitride, cordierite, mullite, alumina, spinel, a silicon carbide-cordierite composite material, lithium aluminum silicate, aluminum titanate, or an Fe-Cr-Al-based metal, and adding a surfactant, water (solvent) and the like to the mixture to obtain a plastic clay.

The clay is formed into a honeycomb shape to obtain a plurality of honeycomb formed body. The clay may be formed into a honeycomb shape using an extrusion method or the like.

The honeycomb formed body is dried and fired to obtain a fired honeycomb body. The honeycomb formed body may be dried by hot-blast drying, microwave drying, dielectric drying, drying under reduced pressure, vacuum drying, freeze drying, or the like. The firing conditions (e.g., temperature and time) differ depending on the type of forming raw material, and may be appropriately selected corresponding to the type of forming raw material.

Then, particles are caused to adhere to the partition wall of the fired honeycomb body to obtain a modified honeycomb structure. The operation of causing the particles to adhere to the partition wall of the fired honeycomb body may be referred to as "modification with particles". The above-mentioned particles may be suitably used.

The particles may be caused to adhere to the partition wall of the fired honeycomb body using a known method. For example, the particles may be caused to adhere to the partition wall of the fired honeycomb body by immersing the fired honeycomb body in a modification slurry that contains particles that can enter the pores to the desired depth, and drying the fired honeycomb body. The particles can thus be easily deposited in the desired position (area) of the fired honeycomb body. The modification slurry may further contain a binder and water. The binder bonds the particles and causes the particles to adhere to the partition wall. The solid content of the modification slurry may be adjusted using water. The particles can be reliably caused to adhere to the desired position by utilizing the binder. The modification slurry may further contain a dispersant, an anti-foaming agent, and the like.

The particles contained in the modification slurry are not particularly limited as long as the particles can enter the pores. The size (diameter) of the particles is preferably 1 to 20%, and more preferably 2 to 10% of the average pore size of the pores. If the size (diameter) of the particles is below 1% of the average pore size of the pores, since the number of particles that adhere to the inner surface of the pores increases, production may take time due to an increase in drying time and the like. If the size (diameter) of the particles is exceeding 20% of the average pore size of the pores, the particles may not enter the pores so that the surface of the partition wall may be clogged.

The material for the particles is not particularly limited. A material similar to that of the above-mentioned particles may be suitably used.

The binder that may be used in the modification slurry is not particularly limited. The above-mentioned binder may be suitably used. The binder is preferably used in an amount of 5 to 100 parts by mass, and more preferably 15 to 50 parts by mass, based on 100 parts by mass of the particles. If the amount of the binder is below 5 parts by mass, the particles may not be sufficiently secured on the inner surface of the pores. If the amount of the binder is exceeding 100 parts by mass, the particles may not enter the pores due to an increase in viscosity.

Then, the cells of the modified honeycomb structure are plugged. Specifically, the plugging sections are formed to plug one open end of given cells among a plurality of cells of the modified honeycomb structure and the other open end of the remaining cells so that each end face of the modified honeycomb structure has a checkered-flag pattern (i.e., adjacent cells are plugged on opposite ends). The cells are plugged by immersing the end face of the modified honeycomb structure in a plugging slurry in a state in which the cells that are not plugged are masked with a mask film or the like so that the cells that are not masked are filled with the plugging slurry, and drying the plugging slurry. A modified honeycomb structure in which given cells are plugged (plugged modified honeycomb structure) is thus obtained. The cells may be plugged after obtaining the fired honeycomb body but before modification with the particles.

The catalyst is then supported on the plugged modified honeycomb structure at the desired position using a known method to obtain a honeycomb catalyst body of the present embodiment.

The method of causing the plugged modified honeycomb structure to support the catalyst is not particularly limited. For example, the partition wall of the honeycomb structure may be wash-coated with a catalyst solution containing the catalyst, and then heated at a high temperature so that the catalyst is secured on the partition wall. A catalyst layer may be formed on the surface of the particles that form the partition wall and an area inside the pores formed in the partition wall (i.e., the catalyst may be supported) by causing a ceramic slurry to adhere to the surface and the inside of an upstream layer of the partition wall of the honeycomb-structured base material by a known ceramic film formation method (e.g., dipping or suction), and drying and heating the ceramic slurry, for example. The amount and the shape of the catalyst may be adjusted to the desired values by controlling the concentration of the catalyst solution, the coating time, and the like.

[3] Honeycomb catalyst body

It is preferable that the honeycomb structure of the present embodiment be formed by combining a plurality of segments and integrally bonding the segments (hereinafter may be referred to as "second honeycomb structure"). It is more preferable that the honeycomb structure (second honeycomb structure) of the present embodiment include a peripheral segment positioned in the periphery of the honeycomb structure and a center segment positioned inside the peripheral segment, and that the first area extend from one end face of the center segment along the cell extension direction in a range corresponding to 1/10 to 1/2 of the total length of the center segment. A honeycomb structure according to a fourth embodiment and a honeycomb structure according to a fifth embodiment described later correspond to such a honeycomb structure.

The segment may be the above-mentioned modified honeycomb structure. Specifically, the honeycomb catalyst body includes a honeycomb-shaped laminate formed by stacking a plurality of modified honeycomb structures (honeycomb segments), a bonding material layer that bonds the honeycomb segments, and a peripheral coating layer that covers the periphery of the laminate. Such a honeycomb catalyst body exhibits improved thermal impact resistance.

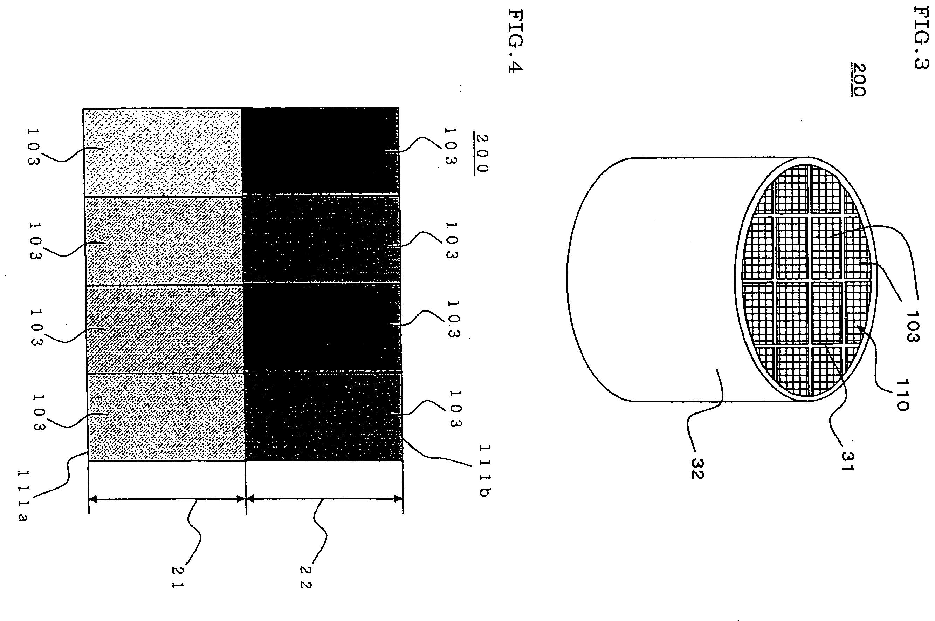

FIG. 3 shows an example of a columnar honeycomb catalyst body 200 that includes a honeycomb-shaped laminate 110 formed by combining sixteen (4×4) modified honeycomb structures (honeycomb segments) 103 in the shape of a quadrangular prism, a bonding material layer 31 that bonds the honeycomb segments 103 of the laminate 110, and a peripheral coating layer 32 that covers the periphery of the laminate. FIG. 3 is a perspective view showing another embodiment of the honeycomb catalyst body according to the present invention.

Examples of the material for the bonding material layer include inorganic fibers, an inorganic binder, an organic binder, inorganic particles, and the like. These materials may be used either individually or in combination. Examples of the inorganic fibers include oxide fibers such as aluminosilicate and alumina, fibers (e.g., SiC fibers) other than the oxide fibers, and the like. Examples of the inorganic binder include a silica sol, alumina sol, clay, and the like. Examples of the organic binder include polyvinyl alcohol (PVA), carboxymethyl cellulose (CMC), methyl cellulose (MC), and the like. Examples of the inorganic particles include ceramics such as silicon carbide, silicon nitride, cordierite, alumina, mullite, and the like.

Examples of the material for the peripheral coating layer include an SiC powder, aluminosilicate fibers, a silica sol, and the like.

The honeycomb catalyst body (second honeycomb structure) of the present embodiment may be any of the honeycomb catalyst bodies according to the following five embodiments. FIGS. 4 to 8 are cross-sectional views schematically showing the cross section of the columnar honeycomb catalyst body that is parallel to the center-axis direction of the honeycomb catalyst body and passes through the center axis. In FIGS. 4 to 8, the cells and the partition wall of the honeycomb catalyst body are omitted. In FIGS. 4 to 8, an area to which the particles adhere is indicated by diagonal lines, and an area that supports the catalyst is indicated in black. The larger the number of diagonal lines, the larger the number of particles per unit volume. The thicker the tone, the larger the amount of catalyst per unit volume.

The honeycomb catalyst body of the first embodiment may be a honeycomb catalyst body 200 shown in FIG. 4 that includes the first area 21 and the second area 22 other than the first area 21, the first area 21 extending from the center to the periphery of the honeycomb catalyst body 200 in a range corresponding to the radius of the honeycomb catalyst body 200 (i.e., the first area 21 includes the entirety of one end face) and extending from one end face 111a of the honeycomb catalyst body 200 along the cell extension direction in a range corresponding to half of the total length of the honeycomb catalyst body 200, a number of particles adhering to the inner surface of the pores formed in the partition wall of the honeycomb segment 103 in the first area 21, the catalyst being supported on the surface of the partition wall and the inner surface of the pores in the first area 21 and the second area 22, and the amount of catalyst supported in the first area 21 per unit volume being smaller than the amount of catalyst supported in the second area 22 per unit volume.

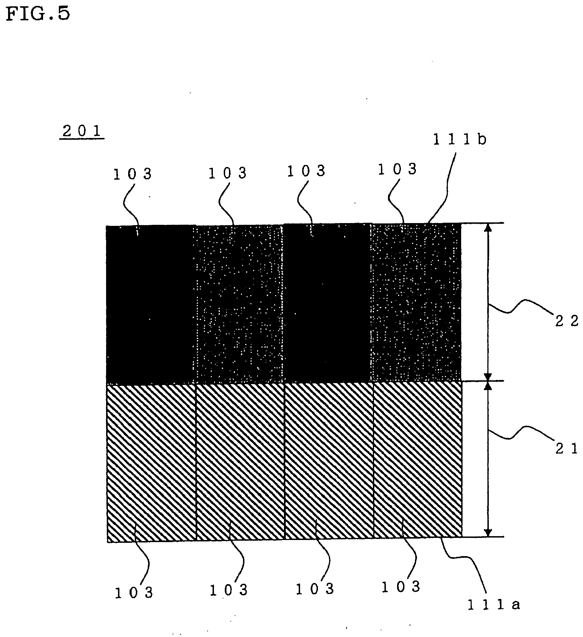

The honeycomb catalyst body of the second embodiment may be a honeycomb catalyst body 201 shown in FIG. 5 that includes the first area 21 and the second area 22 other than the first area 21, the first area 21 extending from the center to the periphery of the honeycomb catalyst body 201 in a range corresponding to the radius of the honeycomb catalyst body 201 (i.e., the first area 21 includes the entirety of one end face) and extending from one end face 111a of the honeycomb catalyst body 201 along the cell extension direction in a range corresponding to half of the total length of the honeycomb catalyst body 201, a number of particles adhering to the inner surface of the pores formed in the partition wall of the honeycomb segment 103 in the first area 21, and the catalyst being supported on the surface of the partition wall and the inner surface of the pores in the second area 22.

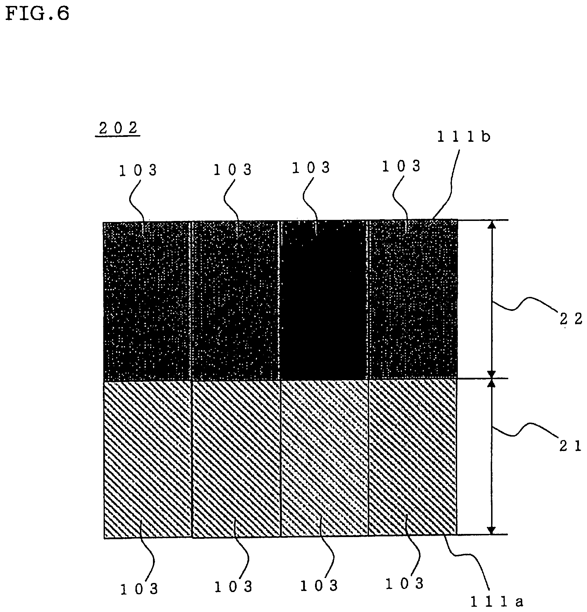

The honeycomb catalyst body of the third embodiment may be a honeycomb catalyst body 202 shown in FIG. 6 that includes the first area 21 and the second area 22 other than the first area 21, the first area 21 extending from the center to the periphery of the honeycomb catalyst body 202 in a range corresponding to the radius of the honeycomb catalyst body 202 (i.e., the first area 21 includes the entirety of one end face) and extending from one end face 111a of the honeycomb catalyst body 202 along the cell extension direction in a range corresponding to half of the total length of the honeycomb catalyst body 202, a number of particles adhering to the inner surface of the pores formed in the partition wall of the honeycomb segments 103 in the first area 21, the catalyst being supported on the surface of the partition wall and the inner surface of the pores in the first area 21 and the second area 22, and the amount of catalyst supported in the first area 21 per unit volume being smaller than the amount of catalyst supported in the second area 22 per unit volume. In the honeycomb catalyst body of the third embodiment, the amount of catalyst supported in the first area 21 per unit volume is smaller than the amount of catalyst supported in the second area 22 per unit volume by a value larger than that of the honeycomb catalyst body of the first embodiment.

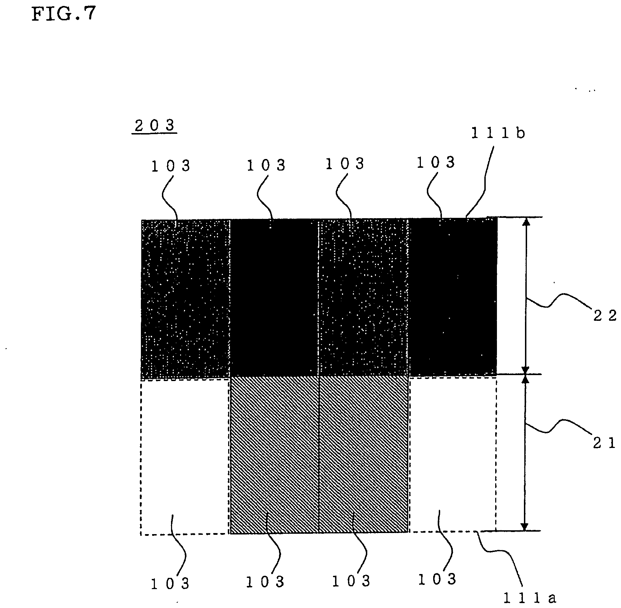

The honeycomb catalyst body of the fourth embodiment may be a honeycomb catalyst body 203 shown in FIG. 7 that includes the first area 21, the second area 22, and a third area, the first area 21 extending from the center to the periphery of the honeycomb catalyst body 203 in a range corresponding to half of the radius of the honeycomb catalyst body 203 and extending from one end face 111a of the honeycomb catalyst body 203 along the cell extension direction in a range corresponding to half of the total length of the honeycomb catalyst body 203, the second area 22 extending from the center to the periphery of the honeycomb catalyst body 203 in a range corresponding to the radius of the honeycomb catalyst body 203 (i.e., the second area 22 includes the entirety of the other end face) and extending from the other end face 111b of the honeycomb catalyst body 203 along the cell extension direction in a range corresponding to half of the total length of the honeycomb catalyst body 203, the third area (enclosed by a broken line in FIG. 7) extending from the periphery to the center of the honeycomb catalyst body 203 in a range corresponding to half of the radius of the honeycomb catalyst body 203 and extending from one end face 111a of the honeycomb catalyst body 203 along the cell extension direction in a range corresponding to half of the total length of the honeycomb catalyst body 203, a number of particles adhering to the inner surface of the pores formed in the partition wall of the honeycomb segment 103 in the first area 21, and the catalyst being supported on the surface of the partition wall and the inner surface of the pores in the second area 22.

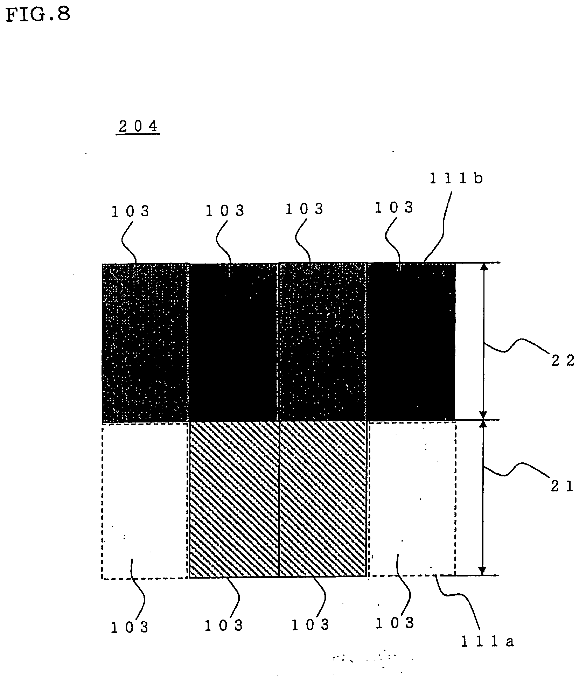

The honeycomb catalyst body of the fifth embodiment may be a honeycomb catalyst body 204 shown in FIG. 8 that includes the first area 21, the second area 22, and a third area, the first area 21 extending from the center to the periphery of the honeycomb catalyst body 204 in a range corresponding to half of the radius of the honeycomb catalyst body 204 and extending from one end face 111a of the honeycomb catalyst body 204 along the cell extension direction in a range corresponding to half of the total length of the honeycomb catalyst body 204, the second area 22 extending from the center to the periphery of the honeycomb catalyst body 204 in a range corresponding to the radius of the honeycomb catalyst body 204 (i.e., the second area 22 includes the entirety of the other end face) and extending from the other end face 111b of the honeycomb catalyst body 204 along the cell extension direction in a range corresponding to half of the total length of the honeycomb catalyst body 204, the third area (enclosed by a broken line in FIG. 8) extending from the periphery to the center of the honeycomb catalyst body 204 in a range corresponding to half of the radius of the honeycomb catalyst body 204 and extending from one end face 111a of the honeycomb catalyst body 204 along the cell extension direction in a range corresponding to half of the total length of the honeycomb catalyst body 204, a number of particles adhering to the inner surface of the pores formed in the partition wall of the honeycomb segment 103 in the first area 21, the catalyst being supported on the surface of the partition wall and the inner surface of the pores in the first area 21, the second area 22, and the third area, and the amount of catalyst supported in the first area 21 and the third area per unit volume being smaller than the amount of catalyst supported in the second area 22 per unit volume.

It is preferable to dispose the honeycomb catalyst body of the present embodiment so that exhaust gas containing particulate matter enters the honeycomb catalyst body through one end face and is discharged through the other end face.

The honeycomb catalyst body (second honeycomb structure) of the present embodiment may be produced as follows, for example.

A clay is prepared. The clay is formed into a honeycomb shape to obtain a honeycomb formed body. The honeycomb formed body is dried and fired to obtain a fired honeycomb body. These steps are performed in the same manner as described above. In this embodiment, a plurality of fired honeycomb bodies is obtained in this manner.

Then, particles are caused to adhere to the partition wall of each fired honeycomb body to obtain a plurality of modified honeycomb segments. The operation of causing the particles to adhere to the partition wall of the fired honeycomb body may be referred to as "modification with particles". The above-mentioned particles may be suitably used. The particles may be caused to adhere to the partition wall of the fired honeycomb body using the above-mentioned method.

Since the honeycomb catalyst body (second honeycomb structure) of the present embodiment is produced by stacking the modified honeycomb segments, the deposition amount and the deposition area of the particles can be changed corresponding to each modified honeycomb segment.

The cells of the modified honeycomb segment are plugged. Specifically, one open end of given cells among the cells of the modified honeycomb segment and the other open end of the remaining cells are plugged to form plugging sections. The plugging sections are formed so that each end face of the modified honeycomb segment has a checkered-flag pattern (i.e., adjacent cells are plugged on opposite ends). The cells are plugged by immersing the end face of the modified honeycomb segment in a plugging slurry in a state in which the cells that are not plugged are masked with a mask film or the like so that the cells that are not masked are filled with the plugging slurry, and drying the plugging slurry.

The resulting plugged modified honeycomb segments (modified honeycomb segments in which the plugging sections are formed) are disposed at the desired positions to obtain a honeycomb-shaped laminate, and the honeycomb segments of the laminate are bonded using a bonding material layer slurry to obtain a honeycomb-shaped bonded product. When bonding the plugged modified honeycomb segments using the bonding material layer slurry, the bonding material layer slurry is applied to the periphery of each plugged modified honeycomb segment. The plugged modified honeycomb segments are assembled in a given three-dimensional shape (e.g., the shape of the honeycomb catalyst body shown in FIG. 3), and compression-bonded. The resulting product is then dried with heating. The bonding material layer slurry may contain the above-mentioned materials for the bonding material layer. The solid content of the bonding material layer slurry is not particularly limited, but may be appropriately selected so that the slurry is easily applied to the periphery of the plugged modified honeycomb segment.

The honeycomb-shaped bonded product is optionally ground to a given shape (e.g., columnar shape). A peripheral coating layer slurry is applied to the periphery of the honeycomb-shaped bonded product, and dried to cover the periphery of the honeycomb-shaped bonded product with the peripheral coating layer to obtain a modified honeycomb structure. The peripheral coating layer slurry may contain the above-mentioned materials for the peripheral coating layer. The solid content of the peripheral coating layer slurry is not particularly limited, but may be appropriately selected so that the slurry is easily applied to the periphery of the honeycomb-shaped bonded product. The peripheral coating layer slurry is preferably applied so that the resulting peripheral coating layer has a thickness of 0.1 to 1.5 mm.

A catalyst slurry is then supported on the modified honeycomb structure at the desired position using a known method (e.g., the above-mentioned method). The honeycomb catalyst body of the present embodiment can thus be obtained.

Note that modification with the particles may be performed after bonding the unmodified honeycomb segments, or may be performed on each honeycomb segment before being bonded. The cells may be filled with the plugging slurry after forming the honeycomb formed body but before firing the honeycomb formed body. The number of firing steps can be reduced by filling the cells with the plugging slurry before firing the honeycomb formed body.

EXAMPLES

The present invention is further described below by way of examples. Note that the present invention is not limited to the following examples.

Porosity (%)

The porosity was determined by cutting a tabular specimen having a thickness equal to that of the partition wall from the modified honeycomb structure, and measuring the porosity of the specimen by the Archimedes method.

Average pore size ($\mu$m)

The average pore size was determined by cutting a specimen having a given shape (5×15 mm) from the modified honeycomb structure, and measuring the average pore size of the specimen using a mercury porosimeter.

Porosity reduction rate (%)

A value calculated by "X-Y" was taken as the porosity reduction rate (%). Note that X is the porosity (%) of the unmodified partition wall, and Y is the porosity (%) of the modified partition wall.

Average pore size reduction amount ($\mu$m)

A value calculated by "A-B" was taken as the average pore size reduction amount ($\mu$m). Note that A is the average pore size ($\mu$m) of the unmodified partition wall, and B is the average pore size ($\mu$m) of the modified partition wall.

Modification height ratio

The modification height ratio was determined by calculating the ratio of the height of the partition wall modified with the particles to the thickness of the partition wall.

Catalyst support amount (g/l)

The catalyst support amount (g/l) was determined as follows. Specifically, the initial weight of the honeycomb structure (modified honeycomb structure) was measured. The honeycomb structure was impregnated with a catalyst slurry similar to that prepared in Example 1 described later in an area corresponding to the second area. The honeycomb structure was then dried. The weight of the resulting modified honeycomb structure was measured. The modified honeycomb structure was impregnated with the catalyst slurry in an area corresponding to the first area. The weight of the resulting modified honeycomb structure was measured. The amount (g/l) of catalyst before the catalyst was secured was calculated based on the volume of the modified honeycomb structure in an area impregnated with the catalyst slurry. The ratio of the amount (g/l) of catalyst with which the first area was impregnated to the amount (g/l) of catalyst with which the second area was impregnated was calculated. After securing the catalyst, the weight of the honeycomb structure was measured. The rate of increase in weight with respect to the initial weight of the honeycomb structure was calculated. The catalyst support amount was calculated based on the ratio calculated before securing the catalyst and the ratio calculated after securing the catalyst.

Pressure loss increase rate (%)

Exhaust gas (200°C) containing soot (PM) was caused to flow through the modified honeycomb structure at a flow rate of 2.27 Nm$^3$/minute so that soot was gradually deposited inside the modified honeycomb structure. The pressure loss of the modified honeycomb structure was measured when the amount of soot deposited reached 4 g/l, and taken as the pressure loss of the modified honeycomb structure after soot was deposited. The above operation was performed on the honeycomb catalyst body instead of the modified honeycomb structure. The pressure loss of the honeycomb catalyst body was measured and taken as the pressure loss of the honeycomb catalyst body after soot was deposited. The pressure loss increase rate (%) was calculated by the following formula.

$$\text{Pressure loss increase rate (\%)} = \{(\text{pressure loss of honeycomb catalyst body} /$$

$$\text{pressure loss of modified honeycomb structure}) - 1\} \times 100$$

Regeneration efficiency increase rate (%)

Soot (6 g/l) was deposited on an engine (2.0 liters, 2000 rpm, 60 Nm). The weight of the sample was measured.

The engine was driven at 2000 rpm and 60 Nm. When the gas temperature on the inlet side of the honeycomb catalyst body was stabilized, the honeycomb catalyst body was subjected to regeneration for 10 minutes. The weight of the honeycomb catalyst body after regeneration was measured. The ratio of the burnt soot to the initial weight was calculated. The temperature of the honeycomb catalyst body during regeneration was adjusted by adjusting post-injection. The regeneration efficiency at a given temperature was calculated based on the relationship between the regeneration temperature and the regeneration efficiency at several points between 600 to 650°C.

Regeneration efficiency increase rate (%) = regeneration efficiency of honeycomb catalyst body - regeneration efficiency of modified honeycomb structure

Example 1

A fired honeycomb body was obtained. Specifically, a SiC powder and a Si metal powder were mixed in a mass ratio of 80:20. A pore former, an organic binder, a surfactant, and water were added to the mixture to obtain a plastic clay. The clay was extruded and dried to obtain a quadrangular prism-shaped (cylindrical) honeycomb formed body (thickness of partition wall: 12 mil, cell density: about 300 cells/in$^2$, cross-sectional shape: square ($35\times35$ mm), length (in the center-axis direction): 152 mm). The ends of the cells of the honeycomb formed body were plugged so that each end has a checkered-flag pattern. Specifically, the ends of the cells were plugged so that the adjacent cells were alternately plugged on opposite ends. The same material as the material for the clay was used as the plugging material (plugging slurry material). After drying the resulting product, the product was degreased at about 400°C in air, and fired at about 1450°C in an inert atmosphere (argon) to obtain a porous fired honeycomb body in which SiC crystal particles were bonded through Si.

A modification slurry was then prepared. Specifically, 150 parts by mass of colloidal silica (solution having a solid content of 40%) and 200 parts by mass of water were added to 150 parts by mass of SiC particles having a particle diameter of 2 $\mu$m. The mixture was stirred sufficiently to prepare a modification slurry. A dispersant and an anti-foaming agent were appropriately added when preparing the modification slurry.

A modified honeycomb structure was then produced. Specifically, the fired honeycomb body was immersed in the modification slurry so that half of the fired honeycomb body was immersed. Unnecessary modification slurry was then removed by blowing air. The fired honeycomb body was then dried and heated at 700°C to obtain a modified honeycomb structure. In the resulting modified honeycomb structure, the first area extended from the center to the periphery of the honeycomb catalyst body in a range corresponding to the radius of the honeycomb catalyst body and extended from one end face of the honeycomb catalyst body along the cell extension direction in a range corresponding to half of the total length of the honeycomb catalyst body.

A catalyst was supported on the modified honeycomb structure at a given position. Specifically, a catalyst slurry was prepared by adding an $Al_2O_3$ sol and water to a Pt-carrying $\gamma$-$Al_2O_3$ catalyst and a $CeO_2$ powder (co-catalyst). The modified honeycomb structure was washcoated with the catalyst slurry so that the amount of Pt-carrying catalyst supported on the modified honeycomb structure per unit volume was 1.06 g/l. The modified honeycomb structure was the dried and heated at 600°C to obtain a honeycomb catalyst body of Example 1.

The resulting honeycomb catalyst body had a porosity of 42%, an average pore size of 14 $\mu$m, a porosity reduction rate of 7.0%, an average pore size reduction amount of 2.0 $\mu$m, an unmodified partition wall catalyst support amount (W/C amount) of 53.5 g/l, a modified partition wall catalyst support amount (W/C amount) of 33 g/l, a pressure loss increase rate of 84%, and a regeneration efficiency increase rate of 14%.

Regarding the catalyst support amount (g/l) shown in Tables 1 to 3, the term "unmodified" indicates the amount of catalyst supported in the second area per unit volume, and the term "modified" indicates the amount of catalyst supported in the first area per unit volume.

Examples 2 to 40 and Comparative Examples 1 to 20

A modified honeycomb structure was obtained in the same manner as in Example 1, except that the particle diameter of the SiC particles added to the plastic clay, the type, the particle diameter, and the amount of the pore-forming material, and the type and the amount of the organic binder were changed. A catalyst was supported on the resulting modified honeycomb structure so that the catalyst support amount (W/C amount) shown in Tables 1 to 3 was achieved to obtain a honeycomb catalyst body. The evaluation results for the honeycomb catalyst body are shown in Tables 1 to 3.

TABLE 1

| | Porosity (%) | Average pore size (μm) | Porosity reduction rate (%) | Average pore size reduction amount (μm) | Modification height ratio | Catalyst support amount (g/l) | | Pressure loss increase rate (%) | Regeneration efficiency increase rate (%) |
|---|---|---|---|---|---|---|---|---|---|
| | | | | | | Unmodified | Modified | | |
| Example 1 | 42 | 14 | 7.0 | 2.0 | 1/2 | 53.5 | 33 | 84 | 14 |
| Example 2 | 42 | 14 | 7.0 | 2.0 | 1/2 | 53.5 | 22.6 | 70 | 15 |
| Example 3 | 42 | 14 | 7.0 | 2.0 | 1/2 | 53.5 | 8.3 | 58 | 15 |
| Example 4 | 42 | 14 | 7.0 | 2.0 | 1/2 | 53.5 | 0 | 52 | 13 |
| Example 5 | 42 | 14 | 7.0 | 2.0 | 1/2 | 34.9 | 34.7 | 58 | 12 |
| Example 6 | 42 | 14 | 7.0 | 2.0 | 1/2 | 34.9 | 24.3 | 44 | 14 |
| Example 7 | 42 | 14 | 7.0 | 2.0 | 1/2 | 34.9 | 5.6 | 29 | 13 |
| Example 8 | 42 | 14 | 7.0 | 2.0 | 1/2 | 34.9 | 0 | 24 | 13 |
| Example 9 | 42 | 14 | 7.0 | 2.0 | 1/2 | 20.6 | 20.3 | 25 | 12 |
| Example 10 | 42 | 14 | 7.0 | 2.0 | 1/2 | 20.6 | 5.8 | 17 | 12 |
| Example 11 | 42 | 14 | 7.0 | 2.0 | 1/2 | 20.6 | 0 | 15 | 10 |
| Example 12 | 42 | 14 | 7.0 | 2.0 | 1/2 | 4.4 | 4.3 | 14 | 7 |
| Example 13 | 42 | 14 | 7.0 | 2.0 | 1/2 | 4.4 | 0 | 12 | 5 |
| Example 14 | 49 | 13 | 7.3 | 2.0 | 1/2 | 53.8 | 53 | 131 | 18 |

| | Porosity (%) | Average pore size (μm) | Porosity reduction rate (%) | Average pore size reduction amount (μm) | Modification height ratio | Catalyst support amount (g/l) | | Pressure loss increase rate (%) | Regeneration efficiency increase rate (%) |
|---|---|---|---|---|---|---|---|---|---|
| | | | | | | Unmodified | Modified | | |
| Example 15 | 49 | 13 | 7.3 | 2.0 | 1/2 | 53.8 | 30.4 | 73 | 14 |
| Example 16 | 49 | 13 | 7.3 | 2.0 | 1/2 | 53.8 | 24.2 | 67 | 16 |
| Example 17 | 49 | 13 | 7.3 | 2.0 | 1/2 | 53.8 | 7.9 | 55 | 15 |
| Example 18 | 49 | 13 | 7.3 | 2.0 | 1/2 | 53.8 | 0 | 51 | 14 |
| Example 19 | 49 | 13 | 7.3 | 2.0 | 1/2 | 34.3 | 22.8 | 36 | 14 |
| Example 20 | 49 | 13 | 7.3 | 2.0 | 1/2 | 34.3 | 6.9 | 25 | 14 |
| Example 21 | 49 | 13 | 7.3 | 2.0 | 1/2 | 34.3 | 0 | 24 | 14 |
| Example 22 | 49 | 13 | 7.3 | 2.0 | 1/2 | 22.7 | 22.4 | 26 | 13 |
| Example 23 | 49 | 13 | 7.3 | 2.0 | 1/2 | 22.7 | 6.5 | 17 | 12 |
| Example 24 | 49 | 13 | 7.3 | 2.0 | 1/2 | 22.7 | 0 | 15 | 11 |

TABLE 2

| | Porosity (%) | Average pore size ($\mu$m) | Porosity reduction rate (%) | Average pore size reduction amount ($\mu$m) | Modification height ratio | Catalyst support amount (g/l) | | Pressure loss increase rate (%) | Regeneration efficiency increase rate (%) |
|---|---|---|---|---|---|---|---|---|---|
| | | | | | | Unmodified | Modified | | |
| Example 25 | 49 | 13 | 7.3 | 2.0 | 1/2 | 3.8 | 3.7 | 10 | 7 |
| Example 26 | 49 | 13 | 7.3 | 2.0 | 1/2 | 3.8 | 0 | 9 | 5 |
| Example 27 | 58 | 14 | 7.5 | 1.6 | 1/2 | 55.5 | 55.1 | 113 | 19 |
| Example 28 | 58 | 14 | 7.5 | 1.6 | 1/2 | 55.5 | 31.4 | 62 | 14 |
| Example 29 | 58 | 14 | 75 | 1.6 | 1/2 | 55.5 | 22.3 | 61 | 17 |
| Example 30 | 58 | 14 | 7.5 | 1.6 | 1/2 | 55.5 | 6.1 | 53 | 16 |
| Example 31 | 58 | 14 | 7.5 | 1.6 | 1/2 | 55.5 | 0 | 51 | 15 |
| Example 32 | 58 | 14 | 7.5 | 1.6 | 1/2 | 35.7 | 35 | 42 | 12 |
| Example 33 | 58 | 14 | 7.5 | 1.6 | 1/2 | 35.7 | 20.9 | 28 | 15 |
| Example 34 | 58 | 14 | 7.5 | 1.6 | 1/2 | 35.7 | 5.8 | 23 | 15 |
| Example 35 | 58 | 14 | 7.5 | 1.6 | 1/2 | 37.5 | 0 | 20 | 14 |
| Example 36 | 58 | 14 | 7.5 | 1.6 | 1/2 | 21.4 | 21.3 | 23 | 13 |
| Example 37 | 58 | 14 | 7.5 | 1.6 | 1/2 | 21.4 | 5.3 | 14 | 13 |
| Example 38 | 58 | 14 | 7.5 | 1.6 | 1/2 | 21.4 | 0 | 11 | 12 |

(continued)

| | Porosity (%) | Average pore size (μm) | Porosity reduction rate (%) | Average pore size reduction amount (μm) | Modification height ratio | Catalyst support amount (g/l) | | Pressure loss increase rate (%) | Regeneration efficiency increase rate (%) |
|---|---|---|---|---|---|---|---|---|---|
| | | | | | | Unmodified | Modified | | |
| Example 39 | 58 | 14 | 7.5 | 1.6 | 1/2 | 3.9 | 3.4 | 7 | 7 |
| Example 40 | 58 | 14 | 7.5 | 1.6 | 1/2 | 3.9 | 0 | 6 | 5 |

TABLE 3

| | Porosity (%) | Average pore size (μm) | Porosity reduction rate (%) | Average pore size reduction amount(μm) | Modification height ratio | Catalyst support amount (g/l) | | Pressure loss increase rate (%) | Regeneration efficiency increase rate (%) |
|---|---|---|---|---|---|---|---|---|---|
| | | | | | | Unmodified | Modified | | |
| Comparative Example 1 | 42 | 14 | 7.0 | 2.0 | 1/2 | 53.5 | 53.5 | 141 | 18 |
| Comparative Example 2 | 42 | 14 | 7.0 | 2.0 | 1/2 | 34.9 | 54.8 | 117 | 15 |
| Comparative Example 3 | 42 | 14 | 7.0 | 2.0 | 1/2 | 20.6 | 52.8 | 98 | 14 |
| Comparative Example 4 | 42 | 14 | 7.0 | 2.0 | 1/2 | 20.6 | 34.5 | 45 | 11 |
| Comparative Example 5 | 42 | 14 | 7.0 | 2.0 | 1/2 | 4.4 | 50.5 | 84 | 9 |
| Comparative Example 6 | 42 | 14 | 7.0 | 2.0 | 1/2 | 4.4 | 33.7 | 39 | 6 |
| Comparative Example 7 | 42 | 14 | 7.0 | 2.0 | 1/2 | 4.4 | 22.6 | 23 | 7 |
| Comparative Example 8 | 49 | 13 | 7.3 | 2.0 | 1/2 | 34.3 | 53.7 | 103 | 15 |
| Comparative Example 9 | 49 | 13 | 7.3 | 2.0 | 1/2 | 34.3 | 34.3 | 51 | 12 |
| Comparative Example 10 | 49 | 13 | 7.3 | 2.0 | 1/2 | 22.7 | 51.9 | 86 | 15 |
| Comparative Example 11 | 49 | 13 | 7.3 | 2.0 | 1/2 | 22.7 | 32.2 | 37 | 11 |
| Comparative Example 12 | 49 | 13 | 7.3 | 2.0 | 1/2 | 3.8 | 50.4 | 76 | 9 |
| Comparative Example 13 | 49 | 13 | 7.3 | 2.0 | 1/2 | 3.8 | 33.7 | 35 | 6 |
| Comparative Example 14 | 49 | 13 | 7.3 | 2.0 | 1/2 | 3.8 | 22.8 | 20 | 8 |

| | Porosity (%) | Average pore size ($\mu$m) | Porosity reduction rate (%) | Average pore size reduction amount($\mu$m) | Modification height ratio | Catalyst support amount (g/l) | | Pressure loss increase rate (%) | Regeneration efficiency increase rate (%) |
|---|---|---|---|---|---|---|---|---|---|
| | | | | | | Unmodified | Modified | | |
| Comparative Example 15 | 58 | 14 | 7.5 | 1.6 | 1/2 | 35.7 | 53.6 | 91 | 16 |
| Comparative Example 16 | 58 | 14 | 7.5 | 1.6 | 1/2 | 21.4 | 51.6 | 75 | 15 |
| Comparative Example 17 | 58 | 14 | 7.5 | 1.6 | 1/2 | 21.4 | 34.4 | 31 | 11 |
| Comparative Example 18 | 58 | 14 | 7.5 | 1.6 | 1/2 | 3.9 | 54.5 | 70 | 9 |
| Comparative Example 19 | 58 | 14 | 7.5 | 1.6 | 1/2 | 3.9 | 32.6 | 24 | 6 |
| Comparative Example 20 | 58 | 14 | 7.5 | 1.6 | 1/2 | 3.9 | 22.7 | 18 | 8 |

Example 41

Sixteen modified honeycomb structures were obtained in the same manner as in Example 1, except that the particle diameter of the SiC particles added to the plastic clay, the type, the particle diameter, and the amount of the pore former, and the type and the amount of the organic binder were changed so that the porosity, the average pore size, the porosity reduction rate, the average pore size reduction amount, and the modification height ratio shown in Table 4 were achieved. A catalyst was supported on the modified honeycomb structure so that the catalyst support amount (W/C amount) shown in Table 4 was achieved when combining the honeycomb segments to obtain each honeycomb segment.

The honeycomb segments were combined to obtain a honeycomb-shaped laminate (4×4 honeycomb segments). The honeycomb segments were bonded using a bonding material layer slurry to obtain a honeycomb segment bonded product. In this case, a bonding material was applied to the outer circumferential surface of the honeycomb segment to a thickness of about 1 mm to form a bonding material layer, and another honeycomb segment was placed on the bonding material layer. This step was repeated to produce a honeycomb segment laminate. After bonding the honeycomb segments by appropriately applying a pressure from the outside, the resulting product was dried at 120°C for two hours to obtain a honeycomb segment bonded product. The bonding material layer slurry was prepared as follows. Specifically, an SiC powder (inorganic particles), aluminosilicate fibers (oxide fibers), a silica sol aqueous solution and a clay (colloidal oxide) were mixed. After the addition of water, the mixture was kneaded for 30 minutes using a mixer to prepare a bonding material layer slurry.

The periphery of the honeycomb segment bonded product was ground so that the honeycomb segment bonded product had a columnar external shape. After applying a peripheral coating layer slurry, the slurry was dried and cured at 700°C for two hours. A honeycomb catalyst body (φ144×152.4 mm) of Example 41 was thus obtained.

The resulting honeycomb catalyst body had a porosity of 42% (base material), an average pore size of 14 μm, a porosity reduction rate of 6.9% (center segment), an average pore size reduction amount of 2.4 μm, a porosity reduction rate of 6.7% (segment adjacent to the center segment), and an average pore size reduction amount of 2.3 μm. The catalyst support amount (W/C amount) in the upstream half area was 52.7 g/l, the catalyst support amount (W/C amount) in the downstream half area was 52.5 g/l, the pressure loss increase rate was 129%, and the regeneration efficiency increase rate was 17%.

In Table 4, the term "base material" indicates the modified honeycomb structure, the term "center segment" indicates four honeycomb segments that surround the center axis among the sixteen (4×4) honeycomb segments of the laminate, and the values "porosity reduction rate" and "average pore size reduction amount" in the column "center segment" indicate average values for the four honeycomb segments. The value "modification height ratio" in the column "center segment" indicates the modification height ratio when the four honeycomb segments are considered to be one segment. Specifically, when the modification height ratio is "1/2", the first area extended from one end face of the center segment (one end face of the honeycomb catalyst body) along the cell extension direction in a range corresponding to half (1/2) of the total length of the honeycomb catalyst body.

The term "segment adjacent to center segment" indicates each of the twelve honeycomb segments (i.e., peripheral segments) adjacent to the center segments. The values "porosity reduction rate" and "average pore size reduction amount" in the column "segment adjacent to center segment" indicate average values of the twelve honeycomb segments. The value "modification height ratio" in the column "segment adjacent to center segment" indicates the modification height ratio when the twelve honeycomb segments are considered to be one segment (adjacent segments). Specifically, when the modification height ratio is "1/4", the first area extended from one end face of the adjacent segments (one end face of the honeycomb catalyst body) along the cell extension direction in a range corresponding to 1/4 of the total length of the honeycomb catalyst body.

In Table 4, "upstream 1/2" in the column of the catalyst support amount (g/l) indicates the amount of catalyst supported in the second area per unit volume of the honeycomb catalyst body in which the first area extended from one end face of the honeycomb catalyst body along the cell extension direction in a range corresponding to half of the total length of the honeycomb catalyst body, and "downstream 1/2" in the column of the catalyst support amount (g/l) indicates the amount of catalyst supported in the first area per unit volume of the honeycomb catalyst body in which the first area extended from one end face of the honeycomb catalyst body along the cell extension direction in a range corresponding to half of the total length of the honeycomb catalyst body.

(Examples 42 to 81 and Comparative Examples 21 to 39)

A honeycomb segment was produced in the same manner as in Example 41. The honeycomb segments thus produced were combined to produce a honeycomb catalyst body. The honeycomb catalyst body was evaluated in the same manner as described above. The evaluation results are shown in Tables 4 to 7.

TABLE 4

| | Base material | | Center segment | | | Segment adjacent to center segment | | | Catalyst support amount (g/l) | | Pressure loss increase loss rate (%) | Regeneration efficiency increase rate (%) |
|---|---|---|---|---|---|---|---|---|---|---|---|---|
| | Porosity (%) | Average pore size (μm) | Porosity reduction rate (%) | Average pore size reduction amount (μm) | Modification height ratio | Porosity reduction rate (%) | Average pore size reduction amount (μm) | Modification height ratio | Upstream 1/2 | Downstream 1/2 | | |
| Example 41 | 42 | 14 | 6.9 | 2.4 | 1/2 | 6.7 | 2.3 | 1/4 | 52.7 | 52.5 | 129 | 17 |
| Example 42 | 42 | 14 | 6.9 | 2.4 | 1/2 | 6.7 | 2.3 | 1/4 | 52.7 | 33.4 | 76 | 14 |
| Example 43 | 42 | 14 | 6.9 | 2.4 | 1/2 | 6.7 | 2.3 | 1/4 | 52.7 | 21.7 | 59 | 15 |
| Example 44 | 42 | 14 | 6.9 | 2.4 | 1/2 | 6.7 | 2.3 | 1/4 | 52.7 | 8 | 53 | 14 |
| Example 45 | 42 | 14 | 6.9 | 2.4 | 1/2 | 6.7 | 2.3 | 1/4 | 52.7 | 0 | 51 | 13 |
| Example 46 | 42 | 14 | 6.9 | 2.4 | 1/2 | 6.7 | 2.3 | 1/4 | 35.2 | 34.8 | 51 | 12 |
| Example 47 | 42 | 14 | 6.9 | 2.4 | 1/2 | 6.7 | 2.3 | 1/4 | 35.2 | 23.4 | 36 | 13 |
| Example 48 | 42 | 14 | 6.9 | 2.4 | 1/2 | 6.7 | 2.3 | 1/4 | 35.2 | 5.6 | 23 | 13 |
| Example 49 | 42 | 14 | 6.9 | 2.4 | 1/2 | 6.7 | 2.3 | 1/4 | 35.2 | 0 | 21 | 12 |
| Example 50 | 42 | 14 | 6.9 | 2.4 | 1/2 | 6.7 | 2.3 | 1/4 | 21.3 | 21 | 20 | 12 |
| Example 51 | 42 | 14 | 6.9 | 2.4 | 1/2 | 6.7 | 2.3 | 1/4 | 21.3 | 5.8 | 11 | 11 |
| Example 52 | 42 | 14 | 6.9 | 2.4 | 1/2 | 6.7 | 2.3 | 1/4 | 21.3 | 0 | 9 | 10 |

(continued)

| | Base material | | Center segment | | | Segment adjacent to center segment | | | Catalyst support amount (g/l) | | Pressure loss increase loss rate (%) | Regeneration efficiency increase rate (%) |
|---|---|---|---|---|---|---|---|---|---|---|---|---|
| | Porosity (%) | Average pore size (μm) | Porosity reduction rate (%) | Average pore size reduction amount (μm) | Modification height ratio | Porosity reduction rate (%) | Average pore size reduction amount (μm) | Modification height ratio | Upstream 1/2 | Downstream 1/2 | | |
| Example 53 | 42 | 14 | 6.9 | 2.4 | 1/2 | 6.7 | 2.3 | 1/4 | 4.7 | 4.6 | 6 | 5 |
| Example 54 | 42 | 14 | 6.9 | 2.4 | 1/2 | 6.7 | 2.3 | 1/4 | 4.7 | 0 | 4 | 4 |

TABLE 5

| | Base material | | Center segment | | | segment adjacent to center segment | | | Catalyst support amount (g/l) | | Pressure loss in-crease rate (%) | Regeneration efficiency in-crease rate (%) |
|---|---|---|---|---|---|---|---|---|---|---|---|---|
| | Porosity (%) | Average pore size (μm) | Porosity re-duction rate (%) | Average pore size reduction amount (μm) | Modification height ratio | Porosity reduction rate (%) | Average pore size reduction amount (μm) | Modification height ratio | Upstream 1/2 | Downstream 1/2 | | |
| Example 55 | 51 | 23 | 7.1 | 2.3 | 1/2 | 7.2 | 1.9 | 1/4 | 53.6 | 50 | 108 | 16 |
| Example 56 | 51 | 23 | 7.1 | 2.3 | 1/2 | 7.2 | 1.9 | 1/4 | 53.6 | 30 | 62 | 14 |
| Example 57 | 51 | 23 | 7.1 | 2.3 | 1/2 | 7.2 | 1.9 | 1/4 | 53.6 | 24 | 58 | 16 |
| Example 58 | 51 | 23 | 7.1 | 2.3 | 1/2 | 7.2 | 1.9 | 1/4 | 53.6 | 8 | 52 | 14 |
| Example 59 | 51 | 23 | 7.1 | 2.3 | 1/2 | 7.2 | 1.9 | 1/4 | 53.6 | 0 | 51 | 14 |
| Example 60 | 51 | 23 | 7.1 | 2.3 | 1/2 | 7.2 | 1.9 | 1/4 | 34.4 | 34 | 41 | 12 |
| Example 61 | 51 | 23 | 7.1 | 2.3 | 1/2 | 7.2 | 1.9 | 1/4 | 34.4 | 23 | 33 | 14 |
| Example 62 | 51 | 23 | 7.1 | 2.3 | 1/2 | 7.2 | 1.9 | 1/4 | 34.4 | 7 | 21 | 13 |
| Example 63 | 51 | 23 | 7.1 | 2.3 | 1/2 | 7.2 | 1.9 | 1/4 | 34.4 | 0 | 20 | 12 |
| Example 64 | 51 | 23 | 7.1 | 2.3 | 1/2 | 7.2 | 1.9 | 1/4 | 22.5 | 21 | 17 | 11 |
| Example 65 | 51 | 23 | 7.1 | 2.3 | 1/2 | 7.2 | 1.9 | 1/4 | 22.5 | 7 | 9 | 10 |
| Example 66 | 51 | 23 | 7.1 | 2.3 | 1/2 | 7.2 | 1.9 | 1/4 | 22.5 | 0 | 8 | 10 |

|  | Base material | | Center segment | | | segment adjacent to center segment | | | Catalyst support amount (g/l) | | Pressure loss in-crease rate (%) | Regeneration efficiency in-crease rate (%) |
|---|---|---|---|---|---|---|---|---|---|---|---|---|
|  | Porosity (%) | Average pore size (μm) | Porosity re-duction rate (%) | Average pore size reduction amount (μm) | Modification height ratio | Porosity reduction rate (%) | Average pore size reduction amount (μm) | Modification height ratio | Upstream 1/2 | Downstream 1/2 | | |
| Example 67 | 51 | 23 | 7.1 | 2.3 | 1/2 | 7.2 | 1.9 | 1/4 | 3.9 | 0 | 4 | 4 |

TABLE 6

| | Base material | | Center segment | | | segment adjacent to center segment | | | Catalyst support amount (g/l) | | Pressure loss increase rate (%) | Regeneration efficiency increase rate (%) |
|---|---|---|---|---|---|---|---|---|---|---|---|---|
| | Porosity (%) | Average pore size (μm) | Porosity reduction rate (%) | Average pore size reduction amount (μm) | Modification height ratio | Porosity reduction rate (%) | Average pore size reduction amount (μm) | Modification height ratio | Upstream 1/2 | Downstream 1/2 | | |
| Example 68 | 58 | 14 | 7.2 | 1.9 | 1/2 | 7.1 | 1.9 | 1/4 | 55.6 | 55 | 103 | 18 |
| Example 69 | 58 | 14 | 7.2 | 1.9 | 1/2 | 7.1 | 1.9 | 1/4 | 55.6 | 31.6 | 62 | 14 |
| Example 70 | 58 | 14 | 7.2 | 1.9 | 1/2 | 7.1 | 1.9 | 1/4 | 55.6 | 22.3 | 58 | 16 |
| Example 71 | 58 | 14 | 7.2 | 1.9 | 1/2 | 7.1 | 1.9 | 1/4 | 55.6 | 6.4 | 50 | 14 |
| Example 72 | 58 | 14 | 7.2 | 1.9 | 1/2 | 7.1 | 1.9 | 1/4 | 55.6 | 0 | 50 | 14 |
| Example 73 | 58 | 14 | 7.2 | 1.9 | 1/2 | 7.1 | 1.9 | 1/4 | 36.1 | 36 | 43 | 12 |
| Example 74 | 58 | 14 | 7.2 | 1.9 | 1/2 | 7.1 | 1.9 | 1/4 | 36.1 | 22.7 | 32 | 14 |
| Example 75 | 58 | 14 | 7.2 | 1.9 | 1/2 | 7.1 | 1.9 | 1/4 | 36.1 | 5.8 | 20 | 13 |
| Example 76 | 58 | 14 | 7.2 | 1.9 | 1/2 | 7.1 | 1.9 | 1/4 | 36.1 | 0 | 18 | 13 |
| Example 77 | 58 | 14 | 7.2 | 1.9 | 1/2 | 7.1 | 1.9 | 1/4 | 21.9 | 21.4 | 14 | 12 |
| Example 78 | 58 | 14 | 7.2 | 1.9 | 1/2 | 7.1 | 1.9 | 1/4 | 21.9 | 5.8 | 8 | 12 |
| Example 79 | 58 | 14 | 7.2 | 1.9 | 1/2 | 7.1 | 1.9 | 1/4 | 21.9 | 0 | 7 | 11 |

(continued)

| | Base material | | Center segment | | | segment adjacent to center segment | | | Catalyst support amount (g/l) | | Pressure loss increase rate (%) | Regeneration efficiency increase rate (%) |
|---|---|---|---|---|---|---|---|---|---|---|---|---|
| | Porosity (%) | Average pore size (μm) | Porosity reduction rate (%) | Average pore size reduction amount (μm) | Modification height ratio | Porosity reduction rate (%) | Average pore size reduction amount (μm) | Modification height ratio | Upstream 1/2 | Downstream 1/2 | | |
| Example 80 | 58 | 14 | 7.2 | 1.9 | 1/2 | 7.1 | 1.9 | 1/4 | 4.3 | 4.2 | 2 | 6 |
| Example 81 | 58 | 14 | 7.2 | 1.9 | 1/2 | 7.1 | 1.9 | 1/4 | 4.3 | 0 | 2 | 5 |

TABLE 7

| | Base material | | Center segment | | | segment adjacent to center segment | | | Catalyst support amount (g/l) | | Pressure loss in-crease rate (%) | Regeneration efficiency in-crease rate (%) |
|---|---|---|---|---|---|---|---|---|---|---|---|---|
| | Porosity (%) | Average pore size ($\mu$m) | Porosity reduction rate (%) | Average pore size reduction amount ($\mu$m) | Modification height ratio | Porosity reduction rate (%) | Average pore size reduction amount ($\mu$m) | Modification height ratio | Upstream 1/2 | Downstream 1/2 | | |
| Comparative Example 21 | 42 | 14 | 6.9 | 2.4 | 1/2 | 6.7 | 2.3 | 1/4 | 35.2 | 54.9 | 111 | 15 |
| Comparative Example 22 | 42 | 14 | 6.9 | 2.4 | 1/2 | 6.7 | 2.3 | 1/4 | 21.3 | 53.1 | 89 | 13 |
| Comparative Example 23 | 42 | 14 | 6.9 | 2.4 | 1/2 | 6.7 | 2.3 | 1/4 | 21.3 | 32.6 | 34 | 11 |
| Comparative Example 24 | 42 | 14 | 6.9 | 2.4 | 1/2 | 6.7 | 2.3 | 1/4 | 4.7 | 50 | 74 | 8 |
| Comparative Example 25 | 42 | 14 | 6.9 | 2.4 | 1/2 | 6.7 | 2.3 | 1/4 | 4.7 | 33.3 | 31 | 7 |
| Comparative Example 26 | 42 | 14 | 6.9 | 2.4 | 1/2 | 6.7 | 2.3 | 1/4 | 4.7 | 22.6 | 18 | 7 |
| Comparative Example 27 | 51 | 23 | 7.1 | 2.3 | 1/2 | 7.2 | 1.9 | 1/4 | 34.4 | 54 | 96 | 15 |
| Comparative Example 28 | 51 | 23 | 7.1 | 2.3 | 1/2 | 7.2 | 1.9 | 1/4 | 22.5 | 52 | 79 | 13 |
| Comparative Example 29 | 51 | 23 | 7.1 | 2.3 | 1/2 | 7.2 | 1.9 | 1/4 | 22.5 | 31 | 25 | 11 |
| Comparative Example 30 | 51 | 23 | 7.1 | 2.3 | 1/2 | 7.2 | 1.9 | 1/4 | 3.9 | 50 | 67 | 9 |
| Comparative Example 31 | 51 | 23 | 7.1 | 2.3 | 1/2 | 7.2 | 1.9 | 1/4 | 3.9 | 33 | 24 | 6 |
| Comparative Example 32 | 51 | 23 | 7.1 | 2.3 | 1/2 | 7.2 | 1.9 | 1/4 | 3.9 | 23 | 15 | 7 |

| | Base material | | Center segment | | | segment adjacent to center segment | | | Catalyst support amount (g/l) | | Pressure loss in-crease rate (%) | Regeneration efficiency in-crease rate (%) |
|---|---|---|---|---|---|---|---|---|---|---|---|---|
| | Porosity (%) | Average pore size (μm) | Porosity reduction rate (%) | Average pore size reduction amount (μm) | Modification height ratio | Porosity reduction rate (%) | Average pore size reduction amount (μm) | Modification height ratio | Upstream 1/2 | Downstream 1/2 | | |
| Comparative Example 33 | 51 | 23 | 7.1 | 2.3 | 1/2 | 7.2 | 1.9 | 1/4 | 3.9 | 5 | 5 | 5 |
| Comparative Example 34 | 58 | 14 | 7.2 | 1.9 | 1/2 | 7.1 | 1.9 | 1/4 | 36.1 | 54.7 | 89 | 15 |
| Comparative Example 35 | 58 | 14 | 7.2 | 1.9 | 1/2 | 7.1 | 1.9 | 1/4 | 21.9 | 51.7 | 70 | 15 |
| Comparative Example 36 | 58 | 14 | 7.2 | 1.9 | 1/2 | 7.1 | 1.9 | 1/4 | 21.9 | 33.8 | 29 | 11 |
| Comparative Example 37 | 58 | 14 | 7.2 | 1.9 | 1/2 | 7.1 | 1.9 | 1/4 | 4.3 | 54.6 | 64 | 9 |
| Comparative Example 38 | 58 | 14 | 7.2 | 1.9 | 1/2 | 7.1 | 1.9 | 1/4 | 4.3 | 33.1 | 24 | 6 |
| Comparative Example 39 | 58 | 14 | 7.2 | 1.9 | 1/2 | 7.1 | 1.9 | 1/4 | 4.3 | 22.7 | 13 | 7 |

As is clear from Tables 1 to 7, the honeycomb catalyst bodies of Examples 1 to 81 could effectively collect and remove particulate matter as compared with the honeycomb catalyst bodies of Comparative Examples 1 to 39. Since the catalyst was supported selectively in Examples 1 to 81, the amount of catalyst could be reduced (i.e., the production cost was reduced). Moreover, the rate of increase in pressure loss was small in Examples 1 to 81 as compared with Comparative Examples 1 to 39. In addition, the honeycomb catalyst bodies of Examples 1 to 81 could be easily produced as compared with the honeycomb catalyst bodies of Comparative Examples 1 to 39.

The honeycomb catalyst body of the present invention may be suitably utilized as a filter that removes particulate matter contained in exhaust gas discharged from an internal combustion engine (e.g., automotive engine, construction machine engine, stationary industrial engine, and the like), a combustion apparatus, and the like.

**Claims**

1. A honeycomb catalyst body (200) comprising:

   a modified honeycomb structure (103) that includes a porous partition wall having a number of pores, the partition wall being disposed to form a plurality of cells (12) through the modified honeycomb structure between two end faces (11 a, 11 b);
   a catalyst that is supported in a given area of the partition wall; and
   plugging sections (14) that plug one open end of given cells at one end face (111 a) and the other open end of the remaining cells at the other end face (111b);
   the modified honeycomb structure (103) including:

   a first area (21) that includes a modified partition wall and includes at least part of one end face (111 a) of the modified honeycomb structure (103), a number of particles adhering to an inner surface of pores formed in the modified partition wall; and
   a second area (22) that includes an unmodified partition wall and includes at least part of the other end face (111b) of the modified honeycomb structure (103), the particles not adhering to the unmodified partition wall;
   the modified partition wall having a porosity lower than that of the unmodified partition wall;
   an amount of the catalyst supported in the first area (21) per unit volume being smaller than that of the second area (22);
   wherein the first area (21) extends from a center to a periphery of the honeycomb catalyst body (200) in a range corresponding to 2/5 to 1/1 of a radius of the honeycomb catalyst body (200) and extends from the one end face (111 a) of the honeycomb catalyst body (200) along a cell extension direction in a range corresponding to 1/10 to 1/2 of a total length of the honeycomb catalyst body (200).

2. The honeycomb catalyst body (200) according to claim 1,
   the honeycomb catalyst body (200) being formed by integrally bonding a plurality of segments (103).

3. The honeycomb catalyst body (200) according to claim 2, comprising:

   a peripheral segment positioned in a periphery of the honeycomb catalyst body (200) and a center segment positioned inside the peripheral segment,
   wherein the first area (21) extends from one end face (111 a) of the center segment along the cell extension direction in a range corresponding to 1/10 to 1/2 of a total length of the center segment.

4. The honeycomb catalyst body according to any one of claims 1 to 3,
   wherein the partition wall of the modified honeycomb structure (103) has a porosity of 30 to 80%.

5. The honeycomb catalyst body (200) according to any one of claims 1 to 4,
   wherein the partition wall of the modified honeycomb structure (103) has an average pore size of 5 to 40 $\mu$m.

6. The honeycomb catalyst body (200) according to any one of claims 1 to 5,
   wherein an amount of the catalyst supported in the second area (22) per unit volume is 5 to 50 g/l.

7. The honeycomb catalyst body (200) according to any one of claims 1 to 6,
   wherein an amount of the catalyst supported in the first area (21) per unit volume is 0 to 40 g/l.

8. The honeycomb catalyst body (200) according to any one of claims 1 to 7,
   the honeycomb catalyst body (200) satisfying the following formula (1),

$$2 \leq X\text{-}Y \leq 20 \qquad (1)$$

where, X is a porosity (%) of the unmodified partition wall, and Y is a porosity (%) of the modified partition wall.

9. The honeycomb catalyst body (200) according to any one of claims 1 to 8,
   the honeycomb catalyst body (200) satisfying the following formula (2),

$$0.1 \leq A\text{-}B \leq 10 \qquad (2)$$

where, A is an average pore size ($\mu$m) of the unmodified partition wall, and B is an average pore size ($\mu$m) of the modified partition wall.

10. The honeycomb catalyst body (200) according to any one of claims 1 to 9,
    wherein the one end face (111 a) has a cell open ratio higher than that of the other end face (111 b).


**Patentansprüche**

1. Wabenkatalysatorkörper (200), umfassend:

   eine modifizierte Wabenstruktur (103), die eine poröse Trennwand mit einer Anzahl von Poren aufweist, wobei die Trennwand konfiguriert ist, um zwischen zwei Endflächen (11a, 11b) eine Vielzahl von Zellen (12) durch die modifizierte Wabenstruktur hindurch auszubilden;
   einen Katalysator, der in einem gegebenen Bereich der Trennwand gelagert ist; und
   Verschlussabschnitte (14), die ein offenes Ende von gegebenen Zellen auf einer Endfläche (111 a) und das andere offene Ende der verbleibenden Zellen auf der anderen Endfläche (111 b) verschließen;
   wobei die modifizierte Wabenstruktur (103) Folgendes umfasst:

   einen ersten Bereich (21), der eine modifizierte Trennwand und mindestens einen Teil von einer Endfläche (111 a) der modifizierten Wabenstruktur (103) umfasst, wobei eine Anzahl von Teilchen auf einer Innenfläche von Poren, die in der modifizierten Trennwand ausgebildet sind, anhaftet; und
   einen zweiten Bereich (22), der eine nicht modifizierte Trennwand und mindestens einen Teil der anderen Endfläche (111 b) der modifizierten Wabenstruktur (103) umfasst, wobei die Teilchen auf der nicht modifizierten Trennwand nicht anhaften;
   wobei die modifizierte Trennwand eine Porosität aufweist, die niedriger ist als die der nicht modifizierten Trennwand; wobei
   eine Menge des im ersten Bereich (21) gelagerten Katalysators pro Volumeneinheit geringer ist als die des zweiten Bereichs (22); und wobei
   der erste Bereich (21) sich vom Mittelpunkt bis zu einem Umfang des Wabenkatalysatorkörpers (200) über eine Entfernung, die 2/5 bis 1/1 des Radius des Wabenkatalysatorkörpers (200) entspricht, erstreckt, und sich von einer Endfläche (111 a) des Wabenkatalysatorkörpers (200) entlang einer Zellerstreckungsrichtung über eine Entfernung, die 1/10 bis 1/2 der Gesamtlänge des Wabenkatalysatorkörpers (200) entspricht, erstreckt.

2. Wabenkatalysatorkörper (200) nach Anspruch 1,
   wobei der Wabenkatalysatorkörper (200) durch einstückiges Verbinden einer Vielzahl von Segmenten (103) ausgebildet ist.

3. Wabenkatalysatorkörper (200) nach Anspruch2, umfassend:

   ein Umfangssegment, das in einem Umfang des Wabenkatalysatorkörpers (200) angeordnet ist, und ein zentrales Segment, das innerhalb des Umfangssegments angeordnet ist, wobei

der erste Bereich (21) sich von einer Endfläche (111a) des zentralen Segments entlang der Zellerstreckungsrichtung über eine Entfernung, die 1/10 bis 1/2 der Gesamtlänge des zentralen Segments entspricht, erstreckt.

4. Wabenkatalysatorkörper (200) nach einem der Ansprüche 1 bis 3, wobei die Trennwand der modifizierten Wabenstruktur (103) eine Porosität von 30 bis 80 % aufweist.

5. Wabenkatalysatorkörper (200) nach einem der Ansprüche 1 bis 4, wobei die Trennwand der modifizierten Wabenstruktur (103) eine mittlere Porengröße von 5 bis 40 $\mu$m aufweist.

6. Wabenkatalysatorkörper (200) nach einem der Ansprüche 1 bis 5, wobei eine Menge des im zweiten Bereich (22) gelagerten Katalysators pro Volumeneinheit 5 bis 50 g/l beträgt.

7. Wabenkatalysatorkörper (200) nach einem der Ansprüche 1 bis 6, wobei eine Menge des im ersten Bereich (21) gelagerten Katalysators pro Volumeneinheit 0 bis 40 g/l beträgt.

8. Wabenkatalysatorkörper (200) nach einem der Ansprüche 1 bis 7, wobei der Wabenkatalysatorkörper (200) folgender Formel (1) genügt:

$$2 \leq X-Y \leq 20 \qquad (1)$$

wobei X die Porosität (%) der nicht modifizierten Trennwand und Y die Porosität (%) der modifizierten Trennwand ist.

9. Wabenkatalysatorkörper (200) nach einem der Ansprüche 1 bis 8, wobei der Wabenkatalysatorkörper (200) folgender Formel (2) genügt:

$$0,1 \leq A-B \leq 10 \qquad (2)$$

wobei A die mittlere Porengröße ($\mu$m) der nicht modifizierten Trennwand und B die mittlere Porengröße ($\mu$m) der modifizierten Trennwand ist.

10. Wabenkatalysatorkörper (200) nach einem der Ansprüche 1 bis 9, wobei die eine Endfläche (111 a) ein Verhältnis offener Zellen aufweist, das größer ist als das der anderen Endfläche (111 b).

**Revendications**

1. Corps de catalyseur en nids d'abeilles (200) comprenant :

une structure en nids d'abeilles modifiée (103) qui comprend une paroi de séparation poreuse ayant un certain nombre de pores, la paroi de séparation étant disposée pour former une pluralité de cellules (12) à travers la structure en nids d'abeilles modifiée entre deux faces d'extrémité (11a, 11b) ;
un catalyseur qui est supporté dans une zone donnée de la paroi de séparation ;
et des sections de bouchage (14) qui bouchent une extrémité ouverte de cellules données à une première face d'extrémité (111a) et l'autre extrémité ouverte des cellules restantes à l'autre face d'extrémité (111b) ;
la structure modifiée en nids d'abeilles (103) comprenant :

une première zone (21) qui comprend une paroi de séparation modifiée et comprend au moins une partie d'une première face d'extrémité (111a) de la structure en nids d'abeilles modifiée (103), un nombre de particules adhérant à une surface intérieure de pores formés dans la paroi de séparation modifiée ; et
une seconde zone (22) qui comprend une paroi de séparation non modifiée et comprend au moins une partie de l'autre face d'extrémité (111b) de la structure en nids d'abeilles modifiée (103), les particules n'adhérant pas à la paroi de séparation non modifiée ;
la paroi de séparation modifiée ayant une porosité inférieure à celle de la paroi de séparation non modifiée ;
une quantité du catalyseur supporté dans la première zone (21) par unité de volume étant plus petite que celui de la deuxième zone (22) ;

dans lequel la première zone (21) s'étend d'un centre à une périphérie du corps de catalyseur en nids d'abeilles (200) dans une plage correspondant à 2/5 à 1/1 d'un rayon du corps de catalyseur en nids d'abeilles (200) et s'étend depuis la première face d'extrémité (111a) du corps de catalyseur en nids d'abeilles (200) le long d'une direction d'extension de cellule dans une plage correspondant à 1/10 à 1/2 d'une longueur totale du corps de catalyseur en nids d'abeilles (200).

2. Corps de catalyseur en nids d'abeilles (200) selon la revendication 1,
   le corps de catalyseur en nids d'abeilles (200) étant formé par une liaison intégrale d'une plusieurs segments (103).

3. Corps de catalyseur en nids d'abeilles (200) selon la revendication 2, comprenant :

   un segment périphérique positionné dans une périphérie du corps de catalyseur en nids d'abeilles (200) et un segment central positionné à l'intérieur du segment périphérique,
   dans lequel la première zone (21) s'étend d'une première face d'extrémité (111a) du segment central le long de la direction d'extension de la cellule dans une plage correspondant à 1/10 à 1/2 d'une longueur totale du segment central.

4. Corps de catalyseur en nids d'abeilles selon l'une quelconque des revendications 1 à 3,
   dans lequel la paroi de séparation de la structure en nids d'abeilles modifiée (103) a une porosité de 30 à 80 %.

5. Corps de catalyseur en nids d'abeilles (200) selon l'une quelconque des revendications 1 à 4,
   dans lequel la paroi de séparation de la structure en nids d'abeilles modifiée (103) présente un taille moyenne des pores de 5 à 40 μ.

6. Corps de catalyseur en nids d'abeilles (200) selon l'une quelconque des revendications 1 à 5,
   dans lequel une quantité du catalyseur supporté dans la seconde zone (22) par unité de volume est de 5 à 50 g/l.

7. Corps de catalyseur en nids d'abeilles (200) selon l'une quelconque des revendications 1 à 6,
   dans lequel une quantité du catalyseur supporté dans la première zone (21) par unité de volume est de 0 à 40 g/l.

8. Corps de catalyseur en nids d'abeilles (200) selon l'une quelconque des revendications 1 à 7,
   le corps de catalyseur en nid d'abeilles (200) répondant à la formule (1) suivante,

$$2 \leq X - Y \leq 20 \qquad (1)$$

où X est une porosité (%) de la paroi de séparation non modifiée, et Y est une porosité (%) de la paroi de séparation modifiée.

9. Corps de catalyseur en nids d'abeilles (200) selon l'une quelconque des revendications 1 à 8,
   le corps de catalyseur en nid d'abeille (200) répondant à la formule (2) suivante,

$$0,1 \leq A - 1B \leq 10 \qquad (2)$$

où A est une taille moyenne des pores (μm) de la paroi de séparation non modifiée, et B est une taille moyenne des pores (μm) de la paroi de séparation modifiée.

10. Corps de catalyseur en nids d'abeilles (200) selon l'une quelconque des revendications 1 à 9,
    dans lequel la première face d'extrémité (111a) a un taux d'ouverture de cellule supérieur à celui de l'autre face d'extrémité (111b).

FIG.1

FIG.2

FIG.3

200

FIG.4

200

FIG.5

EP 2 108 448 B1

FIG.6

36

FIG.7

FIG.8

<u>2 0 4</u>

1 1 1 b

1 0 3    1 0 3    1 0 3    1 0 3

2 2

2 1

1 0 3    1 0 3    1 0 3    1 0 3

1 1 1 a

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1145378 A
- JP 2006231116 A
- JP 2006272157 A
- WO 2007091688 A